# EUROPEAN PATENT APPLICATION

(11) **EP 4 668 992 A1**
(43) Date of publication of application: **24.12.2025**
(21) Application number: 24756833.0
(22) Date of filing: 09.02.2024
(51) Int. Cl.: H04W 72/40, H04W 52/08, H04W 52/10, H04W 88/04, H04W 92/08

(54) **COMMUNICATION SYSTEM**

(30) Priority: 14.02.2023 JP 2023020840
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2024/004618
(87) International publication number: WO 2024/171988

(57) **Abstract**

A communication system for enabling communication with an IoT device having ultra-low power consumption includes a base station supporting a fifth generation radio access system, a communication terminal configured to connect to the base station, and a device configured to connect to the base station or the communication terminal, in which the base station is configured to perform scheduling of communication between the device and the base station and scheduling of communication between the device and the communication terminal, and the device is configured to communicate with the base station or the communication terminal in accordance with scheduling results from the base station.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

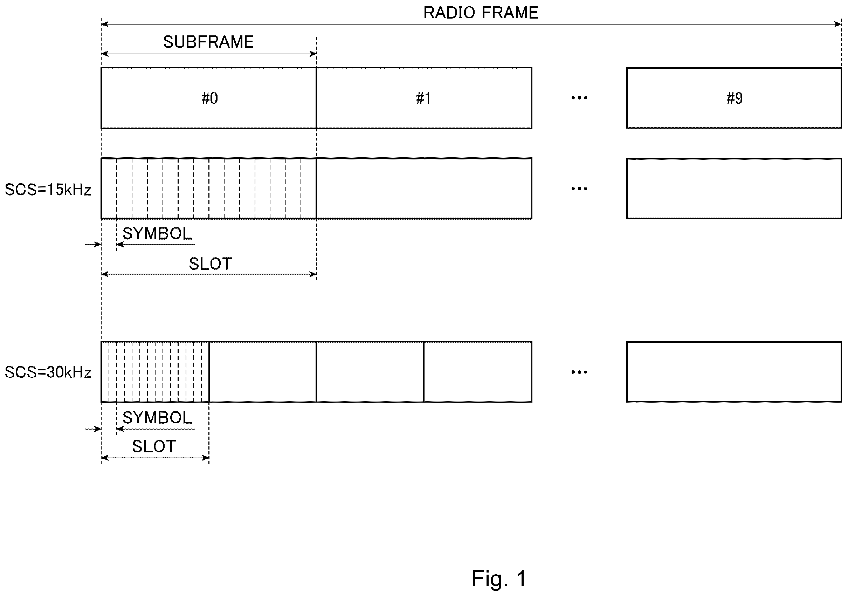

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are required for the mobile communication system. For example, new technologies are required to introduce, into the mobile communication system, Internet of Things (IoT) devices having ultra-low power consumption, such as battery-less devices and devices that do not require replacement or charging and are capable of communication only with an energy storing function. In 3GPP, discussion on such new technologies has begun (NPLs 30, 31, 32, and 33).

### Citation List

### Non Patent Literature

[NPL 1] 3GPP TS 36.300 V17.2.0
[NPL 2] 3GPP TS 38.300 V17.2.0
[NPL 3] "Scenarios, requirements and KPIs for 5G mobile and wireless system", ICT-317669-METIS/D 1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.6.0
[NPL 11] 3GPP TS 38.211 V17.3.0
[NPL 12] 3GPP TS 38.212 V17.3.0
[NPL 13] 3GPP TS 38.213 V17.3.0
[NPL 14] 3GPP TS 38.214 V17.3.0
[NPL 15] 3GPP TS 38.321 V17.2.0
[NPL 16] 3GPP TS 38.322 V17.1.0
[NPL 17] 3GPP TS 38.323 V17.2.0
[NPL 18] 3GPP TS 37.324 V17.0.0
[NPL 19] 3GPP TS 38.331 V17.2.0
[NPL 20] 3GPP TS 38.401 V17.2.0
[NPL 21] 3GPP TS 38.413 V17.2.0
[NPL 22] 3GPP TS 37.340 V17.2.0
[NPL 23] 3GPP TS 38.423 V17.2.0
[NPL 24] 3GPP TS 38.305 V17.2.0
[NPL 25] 3GPP TS 23.273 V17.6.0
[NPL 26] 3GPP TR 23.703 V12.0.0
[NPL 27] 3GPP TS 23.287 V17.4.0
[NPL 28] 3GPP TS 23.303 V17.0.0
[NPL 29] 3GPP TS 38.340 V17.2.0
[NPL 30] 3GPP RP-222685
[NPL 31] 3GPP RP-222335
[NPL 32] 3GPP RP-222126
[NPL 33] 3GPP RP-222069
[NPL 34] 3GPP RP-222440
[NPL 35] Backscatter Communication Research Consortium, "Backscatter Communication" https://bcrc.sfc.keio.ac.jp/research/technology/backscatter-communication/
[NPL 36] EPCglobal, Low Level Reader Protocol (LLRP) Version 1.1 https://gs1go2.azureedge.net/cdn/ff/7aZwEHsz5I8MM-lbIcvFNwjL9OFcGGZgBU_hAjJttEE/1416474591/public/docs/epc/llrp_1_1-standard-20101013.pdf
[NPL 37] EPCglobal, The Application Level Events (ALE) Specification Version 1.1.1 Part I: Core Specification https://www.gs1.org/sites/default/files/docs/epc/ale_1_1_1-standard-core-20090313.pdf
[NPL 38] 3GPP TS 38.101-1 V18.0.0
[NPL 39] 3GPP TS 38.101-2 V18.0.0
[NPL 40] 3GPP TS 38.101-5 V18.0.0

### SUMMARY

### Technical Problem

In the mobile communication system, communication for various services is performed, and thus it is assumed that an enormous number of IoT devices such as wearable terminals and sensors are to be used in the future. Thus, IoT devices having ultra-low power consumption, such as battery-less devices and devices that do not require replacement or charging and are capable of communication only with an energy storing function, are required to be used. New technologies for introducing such IoT devices having ultra-low power consumption into the mobile communication system are required. In 3GPP, discussion on the new technologies has begun (NPLs 30, 31, 32, and 33). However, no disclosures have been made on control of communication between such IoT devices having ultra-low power consumption and apparatuses of the mobile communication system. Thus, the IoT devices having ultra-low power consumption cannot be introduced into the mobile communication system, and communication cannot be performed.

In view of the problem, the present disclosure has one object to implement a communication system for enabling communication with an IoT device having ultra-low power consumption.

### Solution to Problem

A communication system according to the present disclosure includes a base station supporting a fifth generation radio access system, a communication terminal configured to connect to the base station, and a device configured to connect to the base station or the communication terminal. The base station is configured to perform scheduling of communication between the device and the base station and scheduling of communication between the device and the communication terminal, and the device is configured to communicate with the base station or the communication terminal in accordance with scheduling results from the base station.

### Advantageous Effects of Invention

According to the present disclosure, a communication system for enabling communication with an IoT device having ultra-low power consumption can be implemented.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a sequence diagram illustrating an example of scheduling operation from the base station to the UE related to communication between the UE and a device according to a first embodiment;
Fig. 12 is a sequence diagram illustrating a first other example of scheduling operation from the base station to the UE related to communication between the UE and the device according to the first embodiment;
Fig. 13 is a sequence diagram illustrating a second other example of scheduling operation from the base station to the UE related to communication between the UE and the device according to the first embodiment;
Fig. 14 is a diagram illustrating an example of protocol stacks between the UE and the base station related to communication between the UE and the device according to a fifth embodiment;
Fig. 15 is a diagram illustrating another example of protocol stacks between the UE and the base station related to communication between the UE and the device according to the fifth embodiment;
Fig. 16 is a diagram illustrating an example of protocol stacks between the UE and a core NW apparatus related to communication between the UE and the device according to the fifth embodiment; and
Fig. 17 is a diagram illustrating another example of protocol stacks between the UE and the core NW apparatus related to communication between the UE and the device according to the fifth embodiment.

### DETAILED DESCRIPTION

### First Embodiment

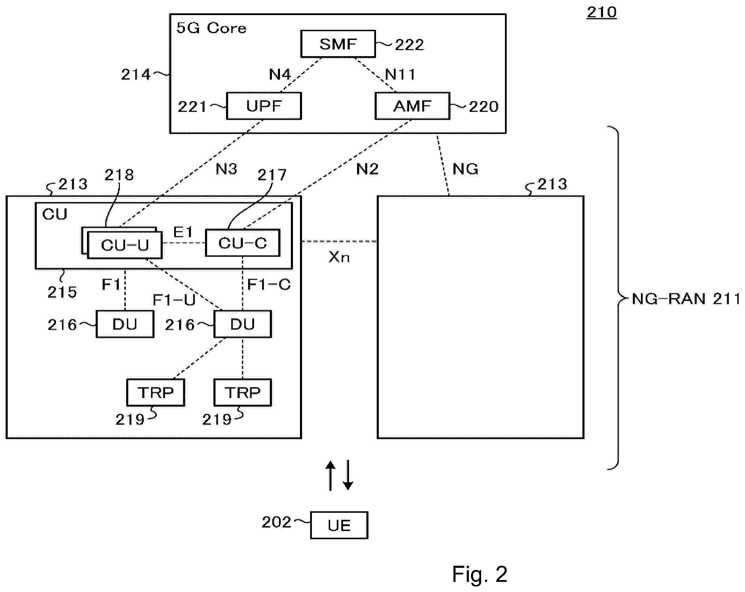

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC _INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

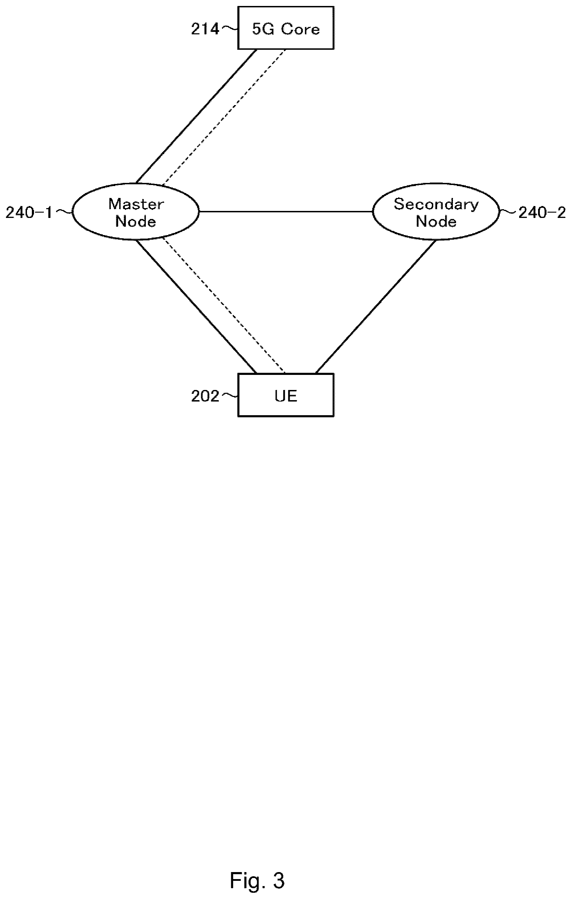

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

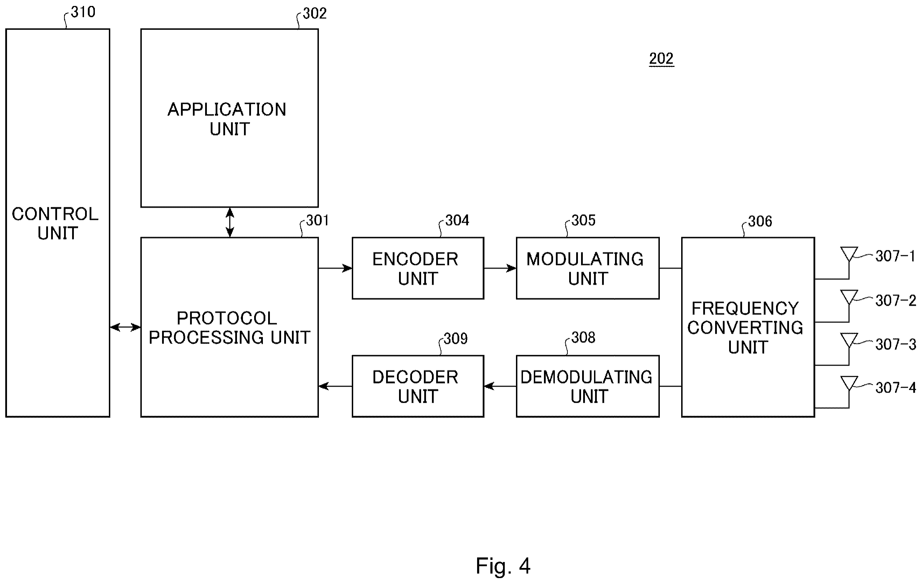

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

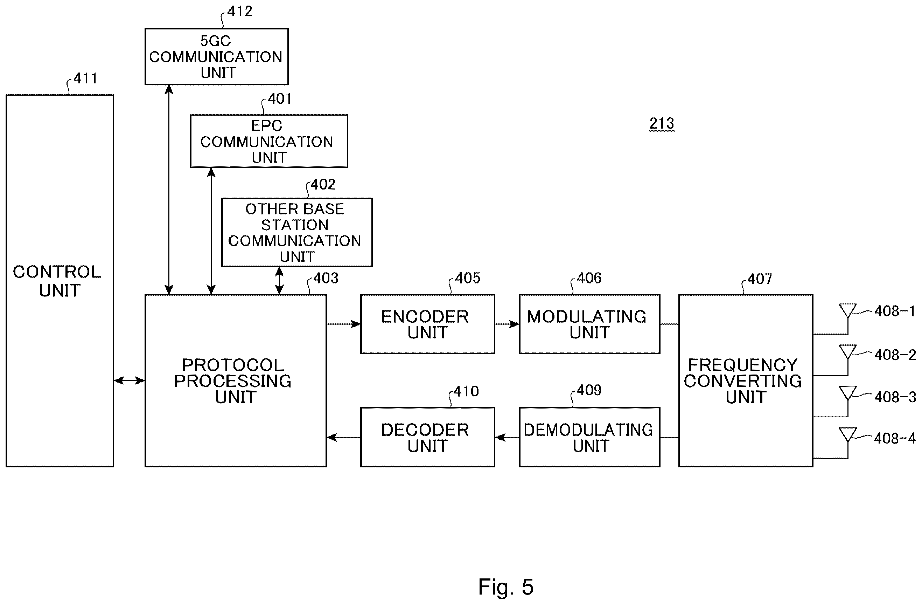

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

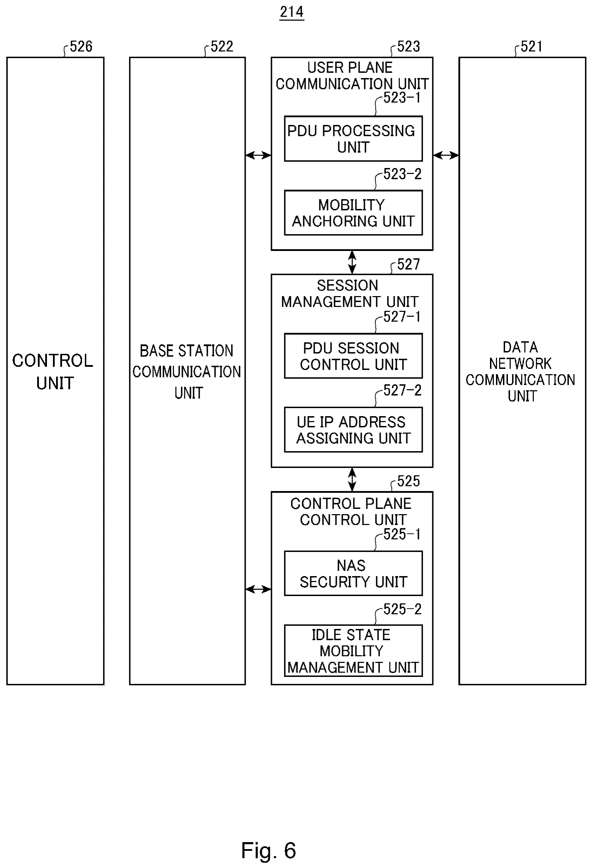

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

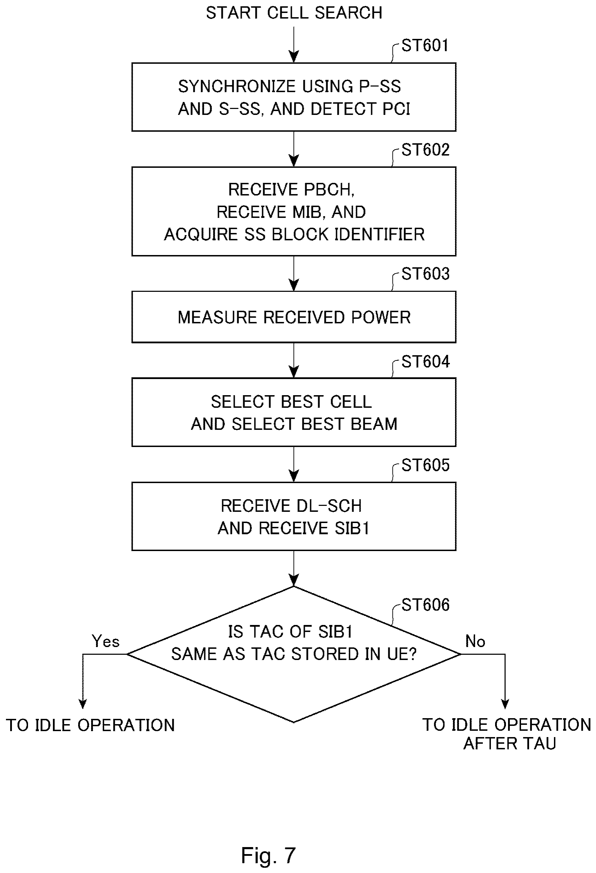

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB 1 includes a tracking area code (TAC).

Next, in Step ST606, the communication terminal compares the TAC of the SIB 1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

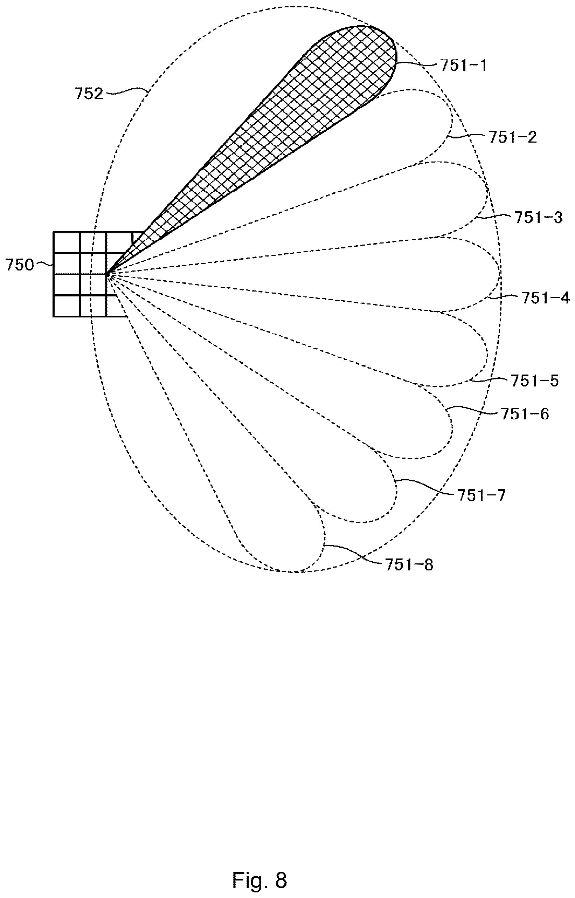

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

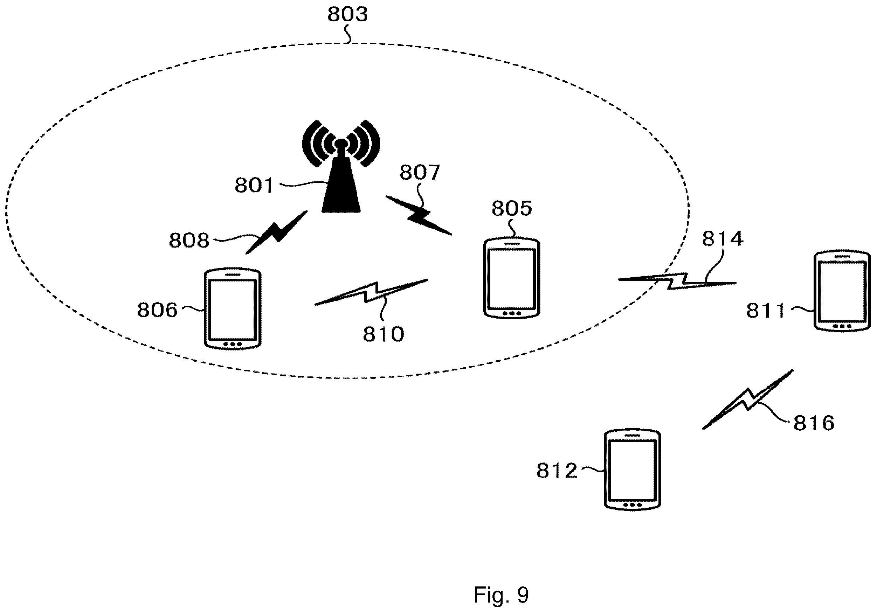

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

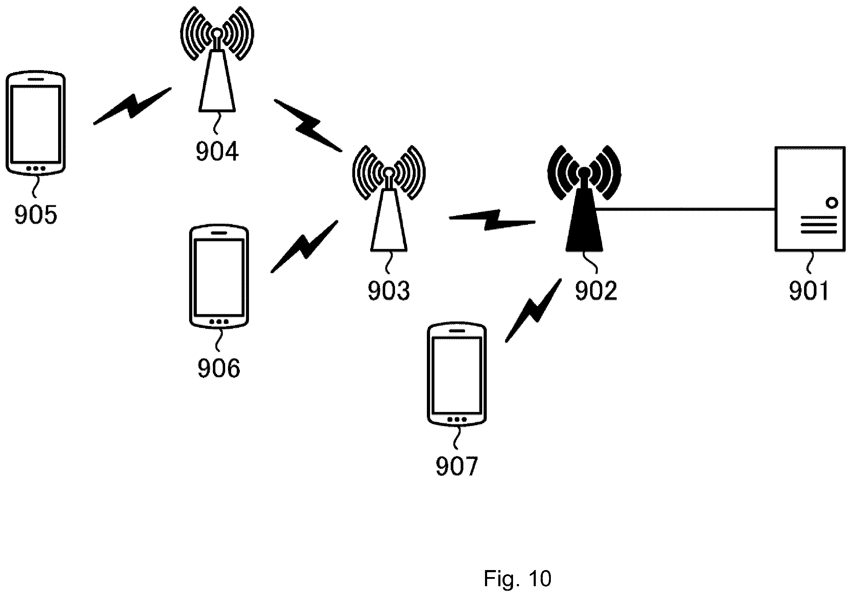

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In 3GPP, introducing IoT devices (which may be hereinafter referred to as devices) having ultra-low power consumption into the mobile communication system has been discussed. It is proposed that an IoT device having ultra-low power consumption performs communication with a UE or a gNB by using a communication method different from a communication method used in air interfaces defined in conventional 3GPP (NPLs 31, 33, and 34). Thus, a method for making communication on an air interface (Uu) between a UE and a gNB and communication on an air interface between a device and a UE or a gNB coexist is required. As interfaces defined in 3GPP, not only the air interface (Uu) between a UE and a gNB but also an air interface (PC5) between a UE and a UE is defined. Thus, a method for making communication on the air interface (PC5) between a UE and a UE and communication on the air interface between a device and a UE or a gNB coexist is also required.

For the sake of the above-described coexistence, it is required to control communication on the air interface between the device and the UE or the gNB. However, no disclosures have been made on a method of controlling communication between the UE and the device. Thus, there is a problem that communication between the UE and the device cannot be performed.

The present embodiment will disclose a method for solving such a problem.

In order to solve the problem, in the present embodiment, the base station schedules communication between the device and the UE or the base station. The scheduling may be dynamic scheduling, or may be semi-persistent scheduling. The base station notifies the UE of information on scheduling. The base station may transmit a scheduling grant to the UE. The grant may be a dynamic grant, or may be a configured grant.

The above-described configured grant may be a type 1 configured grant (see clause 10.3 of NPL 2), for example. Consequently, for example, the amount of signaling from the base station to the UE can be reduced. As another example, the above-described configured grant may be a type 2 configured grant (see clause 10.3 of NPL 2). Consequently, for example, transmission power in communication between the UE and the device can be flexibly controlled.

As information included in the information on scheduling notified from the base station to the UE, the following (1) to (8) are disclosed.

(1) Information on a type of communication object.
(2) Information on resources used for UE-device communication.
(3) Information on the UE.
(4) Information on the device.
(5) Information on received quality of the UE.
(6) Information on desired QoS.
(7) Information on the number of devices.
(8) Combinations of (1) to (7) described above.

The information of (1) described above may be information indicating communication for the device, may be information indicating communication for the base station, or may be information indicating communication for another UE, for example. Different DCI may be used for each type of communication object. For example, DCI for communication for the device may be newly provided and used. Consequently, for example, the UE can quickly determine the communication object.

As the information of (1) described above, a Radio Network Temporary Identifier (RNTI) may be assigned for each type of communication object. For example, the RNTI used for communication for the device may be an RNTI for receiving the PDCCH including scheduling information of communication for the device. The RNTI used for communication for the base station may be an RNTI for receiving the PDCCH including scheduling information of communication with the base station. The base station may notify the UE of the RNTI in advance. The UE may determine whether the PDCCH transmitted from the base station includes the scheduling information of communication for the device or includes the scheduling information of communication with the base station by using the RNTI. Consequently, for example, the UE can quickly determine the type of communication object.

As examples of the information of (2) described above, the following (2-1) to (2-5) are disclosed.

(2-1) Information on a frequency.
(2-2) Information on time.
(2-3) Information on a beam.
(2-4) Information on transmission power.
(2-5) Combinations of (2-1) to (2-4) described above.

The information of (2-1) described above may be information on a frequency used for transmission from the UE to the device or may be information on a frequency used for transmission from the device to the UE, or both of the above may be included, for example. For example, when the base station notifies the UE of the information on a frequency used for transmission from the device to the UE, the UE can quickly recognize a reception frequency from the device.

The information of (2-1) described above may include information on a carrier, for example, information on a CC, may include information on a BWP, may include information on a physical resource block (PRB), may include information on a subcarrier, for example, information on a subcarrier number, or may include information of a combination of the above. The information on a subcarrier number may be uniquely given in one PRB, may be uniquely given in a plurality of PRBs, may be uniquely given in a BWP, or may be uniquely given in a CC, for example. For example, in a case of being uniquely given in one PRB, the size of the information on a subcarrier number can be reduced.

The information of (2-1) described above may be given as information of a center frequency, may be given as information on a higher-side end of a frequency band used for transmission and reception to and from the device, or may be given as information on a lower-side end thereof. The above-described information may include information on a frequency band. The information on a frequency band may be given by using information on an operating band (see NPLs 38, 39, and 40), for example. The above-described information may include information on a frequency width. The information on a frequency width may be given by a PRB unit, may be given by a subcarrier unit, or may be given by a predetermined unit (for example, a kilohertz unit), or a combination of two or more of the above may be used. For example, in a case of being given by the PRB unit and/or the subcarrier unit, the size of the information can be reduced. As another example, in a case of being given by the above-described predetermined unit, flexibility of communication between the device and the UE can be enhanced.

The information of (2-1) described above may include information on a subcarrier spacing. The information may be information on a subcarrier spacing for transmission from the UE to the device, or may be information on a subcarrier spacing for transmission from the device to the UE, for example. The information may be given as an integer multiple and/or 1 over an integer of a predetermined frequency, may be given as information of a power of 2 multiplied by a predetermined frequency, or may be given by a predetermined unit (for example, a kilohertz unit), or a combination of two or more of the above may be used. For example, when the information is given as an integer multiple and/or 1 over an integer of a predetermined frequency, the subcarrier spacing in transmission and reception between the UE and the device can be flexibly changed, and the size of signaling from the base station to the UE can be reduced. As another example, when the information is given by the predetermined unit, communication with the device having various features can be performed.

The information of (2-2) described above may include information on time of transmission from the UE to the device, may include information on time of a response from the device to the UE, may include information on time from completion of transmission from the UE to the device to start of a response from the device to the UE, may include information on time from start of transmission from the UE to the device to completion of a response from the device to the UE, or may include information on a combination of two or more of the above. A plurality of pieces of the above-described information may be included. When a plurality of pieces of the above-described information are included, for example, the base station can collectively perform scheduling of a plurality of transmissions and responses between the UE and the device, and as a result, the amount of signaling between the base station and the UE can be reduced.

The information of (2-2) described above may be given by a frame unit, may be given by a subframe unit, may be given by a slot unit, may be given by a symbol unit, or may be given by a predetermined unit (for example, a microsecond unit), or a combination of two or more of the above may be used. For example, in a case of being given by the frame unit, the subframe unit, the slot unit, and/or the symbol unit, the size of the information can be reduced. As another example, in a case of being given by the above-described predetermined unit, flexibility of communication between the device and the UE can be enhanced.

Configurations of the frame, the subframe, the slot, and/or the symbol (which may be referred to as the frame and the like) used in communication between the UE and the base station may be the same as the configurations of the frame and the like (see Fig. 1) used in communication between the UE and the base station. Consequently, for example, complexity in the communication system can be avoided. As another example, the configurations of the frame and the like used in communication between the UE and the base station may be different from the configurations of the frame and the like used in communication between the UE and the base station. Consequently, for example, flexibility in the communication system can be enhanced.

The lengths of the frame and the like used in communication between the UE and the base station may be the same as or an integer multiple or 1 over an integer of the lengths of the frame and the like used in communication between the UE and the base station. Consequently, for example, complexity in the communication system can be avoided. As another example, the lengths of the frame and the like used in communication between the UE and the base station may be different from the lengths of the frame and the like used in communication between the UE and the base station. For example, one slot may be constituted with the number of symbols (for example, five symbols) other than seven symbols. Consequently, for example, flexibility in the communication system can be enhanced.

A scheduled timing may conform to a frame timing, a slot timing, and/or a symbol timing. The scheduling may be scheduling in communication between the UE and the device, for example. Consequently, for example, complexity in scheduling can be avoided.

As another example, the scheduled timing may not conform to the frame timing, the slot timing, and/or the symbol timing. Consequently, for example, scheduling in communication between the UE and the device can be flexibly performed.

The information of (2-3) described above may include information on a beam used for transmission of a signal from the UE to the device. A signal for deriving a beam may be provided. The information on a beam may include information on the signal. The signal may be a reference signal, for example. A new reference signal used for transmission from the UE to the device may be provided. As another example of the signal, an SRS may be used. As a configuration of the beam used for transmission of the signal from the UE to the device, for example, a configuration of an SRS may be used. The information on a beam may be information on a beam used for SRS transmission from the UE, for example. The information on a beam used for SRS transmission may include an identifier of the SRS, for example. As another example of the information on a beam, information on a beam used by the UE to receive a signal from the base station may be included. The information on a beam may include an identifier of a downlink signal (for example, an identifier of a CSI-RS, an identifier of an SS block), for example. The UE may perform transmission and reception to and from the device by using the information on a beam included in (2-3) described above. Consequently, for example, transmission of radio waves by the UE in an unnecessary direction can be prevented, and as a result, interference in the communication system can be reduced.

The configuration of an SRS used for the configuration of the beam used for transmission of the signal from the UE to the device may be provided separately from the SRS configuration transmitted from the UE to the base station. Consequently, for example, complexity in an RRC signaling configuration of the SRS configuration can be avoided.

The information of (2-3) described above may include information on a beam used by the UE to receive a signal from the device. The information on a beam used for reception may be similar to the above-described information on a beam used for transmission, for example. The information may be used when the device performs transmission to the UE by using radio waves from another UE or the base station, for example. The UE may receive the signal from the device by using the information. Consequently, for example, the UE can quickly receive the signal from the device.

The beam used by the UE to receive a signal from the device and a beam used by the UE to transmit a signal to the device may be the same. Consequently, for example, complexity in the communication system can be avoided. As another example, the above-described beams may be different from each other. For example, the beam used by the UE to receive a signal from the device may have a higher gain than the beam used by the UE to transmit a signal to the device. Consequently, for example, even when power of a signal from the device is small, communication between the UE and the device can be performed.

The base station may perform a configuration of a signal for deriving a beam for the UE. The configuration may be performed by using RRC signaling, for example, RRC reconfiguration signaling. The configuration may include information on resources (for example, a frequency, time, power) used for transmission of the signal.

The UE may transmit a signal for deriving a beam to the device. Transmission of the signal may be performed together with signaling to the device. For example, transmission of the signal may be time-multiplexed on signaling to the device for transmission, or may be frequency-multiplexed for transmission. As another example, transmission of the signal may be performed separately from signaling to the device.

The information of (2-4) described above may include information on transmission power of the UE. The transmission power included in the information may be given by using an absolute value. For example, the transmission power may be given by a dBm unit, or may be given as information obtained by quantizing the absolute value by a predetermined unit. Consequently, for example, the transmission power of the UE can be quickly changed. As another example, the transmission power included in the information may be a relative value. For example, a relative value with respect to predetermined power may be given, or a relative value with respect to previous transmission power may be given. Consequently, for example, the amount of signaling from the base station to the UE can be reduced.

The above-described relative value may be given in a step the same as that for the relative value used for communication between the UE and the base station. Consequently, for example, complexity in the communication system can be avoided. As another example, the above-described relative value may be given in a step different from that for the relative value used for communication between the UE and the base station. For example, the above-described relative value may be given in a step larger than that for the relative value used for communication between the UE and the base station. Consequently, for example, quick control of transmission power in communication between the UE and the device can be performed. As another example, the above-described relative value may be given in a step smaller than that for the relative value used for communication between the UE and the base station. Consequently, for example, fine control of transmission power in communication between the UE and the device can be performed.

The information of (2-4) described above may include information on transmission power from the device to the UE. The UE may notify the device of the information on the transmission power. The device may perform transmission to the UE by using the information. Consequently, for example, the UE can quickly measure path loss between the device and the UE.

The information of (3) described above may include an identifier of the UE, for example, a Radio Network Temporary Identifier (RNTI). The UE may perform transmission to the device by using the information. Consequently, for example, the UE can quickly recognize that it is scheduling information for the UE.

Different identifiers may be assigned to the same UE for communication for the device and communication for the base station. The UE may determine whether it is scheduling for communication for the device or is scheduling for communication for the base station by using the identifier included in (3) described above. Consequently, for example, the UE can quickly determine the communication object.

The information of (4) described above may include information for identifying the device. The information for identifying the device may include an identifier of the device. Consequently, for example, the UE can quickly identify the device as a communication target. The information for identifying the device may include information readable to the user. Consequently, the user can quickly identify the device.

The UE may search only for the device that corresponds to the above-described identifier. Consequently, for example, the UE can quickly search for the device having the identifier.

The information of (4) described above may include information that all devices are a target, or may include information on an indication of device search. The UE may perform device search by using the information. Consequently, for example, the UE can search for any device around the UE.

The information of (4) described above may include a part of the identifier of the device. A part of the identifier of the device may be information on a predetermined number of digits from the lower part of the identifier of the device, or may be information on a predetermined number of digits from the upper part of the identifier of the device, for example. The UE may search only for the device that corresponds to the part of the identifier. Consequently, for example, detection of an excessive number of devices when a large number of devices exist around the UE can be prevented.

The information of (4) described above may include information on a device out of a search target. The information may include an identifier of the device, or a part of the identifier of the device. Information indicating that the device corresponding to the identifier or the part of the identifier is out of the search target may be included. The UE may exclude the device from the search target by using the information. Consequently, for example, when another UE can perform communication with the device, redundant search for the same device by a plurality of UEs can be prevented, and as a result, efficiency, for example, resource use efficiency, in the communication system can be enhanced.

The information of (4) described above may not be included. For example, the UE may detect all devices from which responses are received. Consequently, for example, the amount of signaling between the base station and the UE can be reduced.

The information of (5) described above may include information on received power for radio waves from the device, may include information on a signal to interference plus noise ratio (SINR), may include information on an error rate, or may include a plurality of pieces of the above-described information. Information on a threshold of the received power, the SINR, and/or the error rate may be included. The error rate may be a bit error rate (BER), may be a block error rate (BLER), or may be a frame error rate (FER). The UE may not detect a device having received quality below the threshold or at the threshold or less. Consequently, for example, detection of an excessive number of devices in the UE can be prevented. As another example, the UE may notify the base station of information on the device having received quality below the threshold or at the threshold or less. The base station may determine that another UE performs communication with the device by using the information. Consequently, for example, in the communication system, communication quality between the UE and the device can be secured.

The information of (6) described above may include information on communication capacity, a rate, and/or a bit rate between the UE and the device, may include information on a communication delay, or may include a plurality of pieces of the above-described information. Information on a threshold of the communication capacity, the rate, the bit rate, and/or the delay may be included. The UE may not perform communication with the device having QoS below the threshold or at the threshold or less. As another example, the UE may notify the base station of information on the device having QoS below the threshold or at the threshold or less. The base station may determine that another UE performs communication with the device by using the information. Consequently, for example, QoS in communication between the UE and the device can be secured.

The information of (7) described above may include information on a maximum number of devices that can be detected by the UE. The UE may not detect more devices than the number included in (7) described above or devices equal to or more than the number included in (7) described above. Consequently, for example, detection of an excessive number of devices by the UE can be prevented, and as a result, efficiency, for example, resource use efficiency, in the communication system can be enhanced.

The UE performs communication with the device by using the information of (1) to (8) described above. For example, the UE may perform search, check, and/or detection of the device, may perform acquisition of data owned by the device (for example, reading of data of the device), may perform a writing request for data into the device, or may perform transmission of a radio wave source in communication from the device to the UE. Communication from the device to the UE may be a response to search, check, and/or detection of the device from the UE, may be a notification of data owned by the device, or may be a response to the writing request for data from the UE, for example. Notification of data owned by the device may be performed with a trigger being acquisition of data from the UE to the device, or may be performed with a trigger not being the acquisition, for example.

The UE may request the base station to perform scheduling. The request may be for communication between the UE and the device. The scheduling request may include information on communication between the UE and the device. For example, the scheduling request may include information indicating a scheduling request for communication between the UE and the device.

Different resources may be used between a scheduling request for communication between the UE and the device and a scheduling request for communication between the UE and the base station. For example, identifiers of the scheduling requests may be different, or identifiers of PUCCH resources may be different. Consequently, for example, the base station can quickly recognize whether a scheduling request target of the UE is communication between the UE and the base station or is communication between the UE and the device.

Different resources may be used between a scheduling request for the UE to transmit information on the device to the base station and a scheduling request for transmitting data generated by the UE to the base station. A method of providing different resources may be similar to the above. Consequently, for example, the base station can quickly recognize whether uplink data from the UE is data related to the device or is data generated by the UE.

Communication between the UE and the device may include signaling from the UE to the device, may include data transmitted from the UE to the device (for example, data to be written into the device), may include signaling from the device to the UE, or may include data transmitted from the device to the UE (for example, data read from the device). Different resources may be used for the above-described scheduling requests used for respective transmissions. A method of providing different resources may be similar to the above. Consequently, for example, the base station can quickly recognize a type of transmission and reception between the UE and the device, and as a result, the base station can efficiently perform scheduling of transmission and reception between the UE and the device.

The scheduling request for communication between the UE and the device may be provided for each device. Consequently, for example, flexibility of communication between the UE and the device can be enhanced. As another example, the scheduling request may be common among devices. Consequently, for example, resources assigned to the scheduling request can be saved. As another example, the scheduling request may be provided for each plurality of devices (for example, group of devices). Consequently, for example, resources assigned to the scheduling request can be saved, and flexibility of communication between the UE and the device can be enhanced.

The group may be configured for each communication service, for example. The communication service may be enhanced Mobile Broadband (eMBB), may be Ultra-Reliability Low Latency Communication (URLLC), or may be massive Machine Type Communication (mMTC), for example. As another example, although being determined depending on usage, the communication service may be asset tracking, may be access control, or may be other usage, for example.

As another example, the same resources may be used between the scheduling request for communication between the UE and the device and the scheduling request for communication between the UE and the base station. Consequently, for example, scarcity of resources that can be assigned to the scheduling request can be prevented.

As another example, a buffer status report (BSR) may be used for the scheduling request from the UE to the base station. The scheduling request may be the scheduling request for communication between the UE and the device, or may be the scheduling request for communication between the UE and the base station, for example.

The UE may be capable of using a plurality of BSRs. For example, identification information (for example, an identifier) may be provided to each of the plurality of BSRs. The UE may include the identification information in transmission of the BSR to the base station. The base station may identify the BSR by using the information.

The BSR used for the scheduling request for the UE to transmit information on the device to the base station and the BSR used for the scheduling request for transmitting data generated by the UE to the base station may be different from each other. Consequently, for example, scarcity of logical channel groups (LCGs) to be assigned to the UE can be prevented. As another example, the BSR used for the scheduling request for the UE to transmit information on the device to the base station and the BSR used for the scheduling request for transmitting data generated by the UE to the base station may be the same BSR. Consequently, for example, complexity of the communication system can be avoided.

The BSRs used for the scheduling requests of signaling from the UE to the device, data transmitted from the UE to the device, signaling from the device to the UE, and/or data transmitted from the device to the UE may be different from each other. Consequently, for example, scarcity of LCGs to be assigned to the UE can be prevented. As another example, the above-described BSRs used for the scheduling requests may be the same. Consequently, for example, complexity of the communication system can be avoided.

The BSR used for the scheduling request for communication between the UE and the device may be provided for each device. Consequently, for example, flexibility of communication between the UE and the device can be enhanced. As another example, the BSR used for the scheduling request may be common among devices. Consequently, for example, complexity of the communication system can be avoided. As another example, the BSR used for the scheduling request may be provided for each plurality of devices (for example, group of devices). Consequently, for example, complexity of the communication system can be avoided, and flexibility of the communication system can be enhanced.

A new logical channel may be provided. The logical channel may be a logical channel assigned for communication between the UE and the device, or may be a logical channel for the UE to transmit information on the device to the base station, for example.

The logical channel may be assigned for communication between the UE and the device. The logical channel may be assigned to each device, the same logical channel may be assigned to a plurality of devices (for example, a group of devices), or the same logical channel may be assigned to all devices communicated by the UE.

The same logical channel may be assigned between transmission of the information on the device from the UE to the base station and transmission of the data generated by the UE to the base station. Consequently, for example, scarcity of logical channels can be prevented. As another example, different logical channel may be assigned between transmission of the information on the device from the UE to the base station and transmission of the data generated by the UE to the base station. Consequently, for example, flexibility in the communication system can be enhanced.

The same logical channel may be assigned to signaling from the UE to the device, data transmitted from the UE to the device, signaling from the device to the UE, and/or data transmitted from the device to the UE. Consequently, for example, scarcity of logical channels can be prevented. As another example, different logical channels may be assigned to signaling from the UE to the device, data transmitted from the UE to the device, signaling from the device to the UE, and/or data transmitted from the device to the UE. Consequently, for example, flexibility of the communication system can be enhanced.

The logical channel may belong to a logical channel group. The logical channel group to which the logical channel belongs may belong to a logical channel group different from that of the logical channel related to communication between the UE and the base station. Consequently, for example, the base station can quickly determine communication between the UE and the device and communication between the UE and the base station.

The logical channel group may be assigned to each device, the same logical channel group may be assigned to a plurality of devices, or the same logical channel group may be assigned to all devices communicated by the UE.

The same logical channel group may be assigned between transmission of the information on the device from the UE to the base station and transmission of the data generated by the UE to the base station. Consequently, for example, scarcity of logical channel groups can be prevented. As another example, different logical channel groups may be assigned between transmission of the information on the device from the UE to the base station and transmission of the data generated by the UE to the base station. Consequently, for example, flexibility in the communication system can be enhanced.

The same logical channel group may be assigned to signaling from the UE to the device, data transmitted from the UE to the device, signaling from the device to the UE, and/or data transmitted from the device to the UE. Consequently, for example, scarcity of logical channel groups can be prevented. As another example, different logical channel groups may be assigned to signaling from the UE to the device, data transmitted from the UE to the device, signaling from the device to the UE, and/or data transmitted from the device to the UE. Consequently, for example, flexibility of the communication system can be enhanced.

Communication between the UE and the device may be scheduled for each device. Consequently, for example, complexity in the communication system can be avoided. As another example, communication between the UE and the device may be simultaneously scheduled for a plurality of devices. For example, it may be simultaneously scheduled for a plurality of devices assigned to the same logical channel. Consequently, for example, the number of times of scheduling from the base station to the UE can be reduced, and as a result, efficiency, for example, resource use efficiency, in the communication system can be enhanced.

The UE may notify the base station of information on the device. The information may include device search results, may include information for identifying the device, may include information acquired from the device (for example, data acquired by a sensor attached to the device), or may include information on a combination of two or more of the above, for example. The information may include information on a location of the UE. Consequently, for example, the base station can recognize a rough location of the device. The information may include information on time. The information on time may be associated with the device search results, may be associated with the information acquired from the device, or may be associated with the information on the location of the UE, for example. Consequently, for example, in the communication system, information of data and the like at predetermined time can be predicted with high accuracy.

A notification of the information from the UE to the base station may include information on a plurality of devices. Consequently, for example, the number of times of scheduling to the UE can be reduced.

For a notification of the information on the device from the UE to the base station, the PUSCH may be used. Consequently, for example, complexity of the communication system can be avoided. As another example, for the notification, RRC signaling may be used. Consequently, for example, the UE can notify the base station of many pieces of information. As another example, for the notification, MAC signaling may be used. Consequently, for example, the information can be quickly notified from the UE to the base station. As another example, for the notification, L1/L2 signaling may be used. Consequently, for example, the information can be more quickly notified from the UE to the base station.

The communication between the UE and the device and the notification of the information from the UE to the base station may be scheduled at once. For example, both schedulings may be included in the same signaling. For example, both schedulings may be included in the same DCI, or different DCIs may be included in the same signaling. Consequently, for example, the number of times of signaling from the base station to the UE can be reduced.

A notification of the information on the device from the UE may be performed for a core NW. The core NW apparatus may be an AMF, for example. For example, for the notification, NAS signaling may be used. As another example, a new interface may be provided between the UE and the core NW, and signaling of the interface may be used. Consequently, for example, the amount of processing of the base station can be reduced. As another example, the core NW apparatus may be an SMF, may be a PCF, may be a UPF, or may be a Network Data Analytics Function (NWDAF) (see NPL 10). For example, by notifying the NWDAF of the information on the device, collection, analysis, and the like of data of the device can be quickly performed by the NWDAF.

Each of the communication between the UE and the device and the notification of the information from the UE to the base station may be scheduled. For example, both schedulings may be performed by using different signalings. Consequently, for example, complexity of the communication system can be avoided.

The scheduling request for communication between the UE and the device from the UE to the base station and the scheduling request for the notification of the information from the UE to the base station described above may be performed at once. For example, resources indicating both of the scheduling requests may be assigned and used. Consequently, for example, the amount of signaling from the UE to the base station can be reduced.

As another example, the scheduling request for communication between the UE and the device from the UE to the base station and the scheduling request for the notification of the information from the UE to the base station described above may be performed individually. Consequently, for example, complexity of the communication system can be avoided.

Information necessary for communication between the UE and the device may be predefined. The information may be preconfigured in the communication system, may be configured for each PLMN, may be configured for each Non-Public Network (NPN), may be configured for each tracking area, may be configured for each RNA, may be configured for each cell, may be configured for each UE, or may be configured for each device. As another example, the information may be configured for each communication service. The communication service may be enhanced Mobile Broadband (eMBB), may be Ultra-Reliability Low Latency Communication (URLLC), or may be massive Machine Type Communication (mMTC), for example. As another example, although being determined depending on usage, the communication service may be asset tracking, may be access control, or may be other usage, for example.

As examples of information necessary for communication between the UE and the device, the following (A) to (D) are disclosed.

(A) Information on whether or not communication between the UE and the device can be supported.
(B) Information on a standard supportable as communication between the UE and the device.
(C) Information on resources supportable in communication between the UE and the device.
(D) Combinations of (A) to (C) described above.

The information of (A) described above may include information indicating whether or not to support communication between the UE and the device in the communication system. The UE may determine whether or not to connect to the base station under the communication system by using the information. Consequently, for example, the UE can quickly recognize whether or not communication with the device can be performed.

The information of (B) described above may include information on a standard for communication between the UE and the device supportable in the communication system, for example. The standard may include a standard (for example, ISO/IEC 18000 series) related to the air interface, for example. The UE may determine whether or not to connect to the base station under the communication system by using the information of (B) described above. Consequently, for example, the UE can quickly recognize a standard available for communication with the device.

The information of (B) described above may include information on a standard for the interface between the UE and the network supportable in the communication system, for example. The standard may include a Low Level Reader Protocol (LLRP) (NPL 36), may include an Application Level Event (ALE) (NPL 37), or may include a standard for another interface, for example. The UE may determine whether or not to connect to the base station under the communication system by using the information of (B) described above. Consequently, for example, the UE can quickly recognize an interface between the UE and the network available in relation to communication with the device.

The information of (C) described above may include information on a supportable frequency, may include information on supportable time resources, or may include information on supportable transmission power, for example. The information on a supportable frequency may include the information of (2-1) described above, for example. The information on supportable time resources may include the information of (2-2) described above, may include information on periodicity, or may include information on a time interval, for example. The information on periodicity may include information on periodicity of timings that can be assigned to communication between the UE and the device, for example. The information on a time interval may include information on a time interval that can be assigned to communication between the UE and the device, for example. The information on periodicity and/or the information on a time interval may be given by a radio frame unit, may be given by a subframe unit, may be given by a slot unit, may be given by a symbol unit, may be given by a predetermined time unit (for example, a microsecond unit), or may be given by using a combination of the above. Information on supportable power consumption may include the information of (2-4) described above, or may include information on maximum power consumption of the UE supportable in the communication system, for example. The above-described maximum power consumption of the UE may be power consumption related to communication between the UE and the device.

The information necessary for communication between the UE and the device may be broadcast or notified from the base station to the UE. The base station may broadcast or perform notification of the information to the UE in the system information. As another example, the base station may individually notify the UE of the information. For the notification from the base station to the UE, RRC signaling may be used, MAC signaling may be used, or L1/L2 signaling may be used. As another example, the information may be notified from the core NW to the UE. For the notification, NAS signaling may be used.

The UE may notify the base station of the information necessary for communication between the UE and the device. For the notification from the UE to the base station, for example, RRC signaling may be used. For the RRC signaling, for example, RRC setup request (RRCSetupRequest) signaling may be used. Consequently, for example, the information can be notified from the UE in the RRC_IDLE state to the base station. As another example, RRC resume request (RRCResumeRequest) signaling may be used. Consequently, for example, the information can be notified from the UE in the RRC_INACTIVE state to the base station. As another example, for the notification, MAC signaling may be used, or L1/L2 signaling may be used. Consequently, for example, the UE can quickly notify the base station of the information. As another example, the UE may perform notification of the information in a UE capability. As another example, the UE may perform notification of the information to the core NW. For the notification, for example, NAS signaling may be used.

The information notified by the UE may include the information of (A) to (D) described above. For example, information indicating a piece of information supportable by the UE out of the information illustrated in (A) to (D) described above may be included. The base station and/or the core NW may determine a configuration related to communication between the UE and the device by using the information. Consequently, for example, communication between the UE and the device can be performed.

Transmission and reception between the UE and the base station regarding the information necessary for communication between the UE and the device may be performed in UE registration processing, or may be performed in TAU processing. Consequently, for example, the amount of signaling in the communication system can be reduced.

The base station may notify the UE of the configuration related to communication between the UE and the device. For the notification, for example, RRC signaling may be used. It may be performed by using RRC setup (RRCSetup) signaling for the RRC signaling, for example. Consequently, for example, the base station can perform the configuration related to communication between the UE and the device for the UE in the RRC_IDLE state. As another example, for the RRC signaling, RRC resume (RRCResume) signaling may be used. Consequently, for example, the base station can perform the configuration related to communication between the UE and the device for the UE in the RRC_INACTIVE state. As another example, for the RRC signaling, RRC reconfiguration (RRCReconfiguration) signaling may be used. Consequently, for example, the base station can perform the configuration related to communication between the UE and the device for the UE in the RRC _CONNECTED state. As another example, for the notification, MAC signaling may be used, or L1/L2 signaling may be used. Consequently, for example, the base station can quickly notify the UE of the configuration.

The configuration notified from the base station to the UE may include information similar to that of (A) to (D) described above. For example, regarding (B) described above, information on a standard used for communication between the UE and the device may be included. Regarding (C) described above, information on resources used for communication between the UE and the device may be included. The configuration may include the information of (1) to (8) described above.

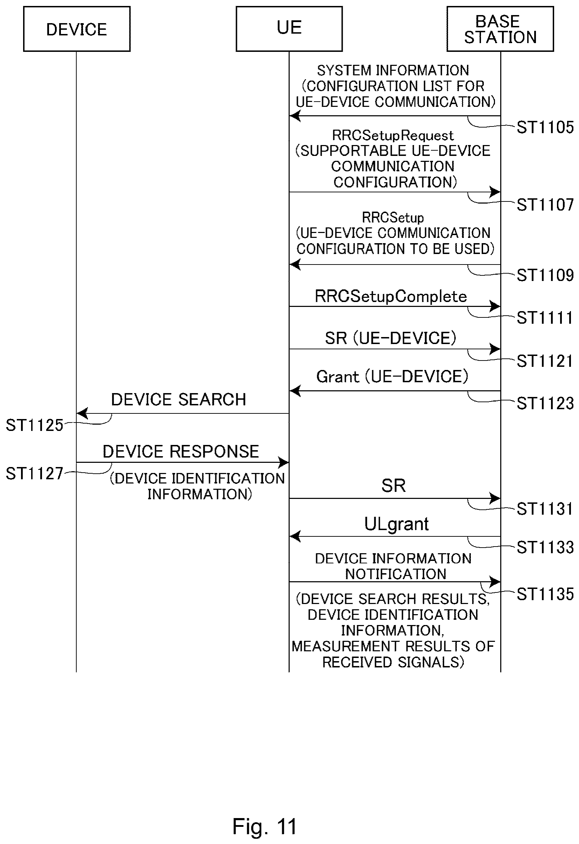

Fig. 11 illustrates an example of scheduling operation from the base station to the UE related to communication between the UE and the device. In the example illustrated in Fig. 11, scheduling from the base station to the UE is dynamically performed. Fig. 11 illustrates a case in which scheduling between the UE and the device and scheduling between the UE and the base station are performed by using different signalings.

In Step ST1105 illustrated in Fig. 11, the base station broadcasts the information necessary for communication between the UE and the device to the UE. The broadcasting may be performed by using the system information, for example. The information may include the information of (A) to (D) described above, for example. There may be a plurality of pieces of the information. For example, the information may include a list of (A) to (D) described above.

In Step ST1107 illustrated in Fig. 11, the UE notifies the base station of information on a configuration, which is supportable by the UE, for communication between the UE and the device. The notification may be performed by using RRC signaling, for example, RRC setup request (RRCSetupRequest) signaling, or RRC resume request (RRCResumeRequest) signaling may be used. The information may include the information of (A) to (D) described above, for example. There may be a plurality of pieces of the information. For example, the information may include a list of (A) to (D) described above supportable by the UE.

In Step ST1109 illustrated in Fig. 11, the base station notifies the UE of information on a configuration used between the UE and the device. The broadcasting may be performed by using RRC signaling, for example, RRC setup (RRCSetup) signaling, may be performed by using RRC resume (RRCResume) signaling, or may be performed by using RRC reconfiguration (RRCReconfiguration) signaling. The information may include information similar to that of (A) to (D) described above, for example. For example, regarding (B) described above, information on a standard used for communication between the UE and the device may be included. Regarding (C) described above, information on resources used for communication between the UE and the device may be included. The configuration may include the information of (1) to (8) described above. The UE performs the configuration for communication between the UE and the device by using the information notified in Step ST1109. In Step ST1111, the UE notifies the base station of completion of the configuration. In Step ST1111, RRC signaling, for example, RRC setup complete (RRCSetupComplete) signaling may be used, RRC resume complete (RRCResumeComplete) signaling may be used, or RRC reconfiguration complete (RRCReconfigurationComplete) signaling may be used.

In Step ST1121 illustrated in Fig. 11, the UE performs a scheduling request to the base station. In the example illustrated in Fig. 11, the request is a scheduling request related to communication between the UE and the device. In the scheduling request of Step ST1121, resources different from those of the scheduling request for communication between the UE and the base station may be used.

In Step ST1123 illustrated in Fig. 11, the base station notifies the UE of a scheduling grant. In the example illustrated in Fig. 11, the grant is a scheduling grant related to communication between the UE and the device. The scheduling grant may include the information illustrated in (1) to (8) described above.

In Step ST1125 illustrated in Fig. 11, the UE transmits a signal to the device. In the example illustrated in Fig. 11, transmission of Step ST1125 may be performed by using the scheduling grant received in Step ST1123. In the example illustrated in Fig. 11, the UE transmits a signal for searching for the device to the device.

In Step ST1127 illustrated in Fig. 11, the device transmits a response to Step ST1125 to the UE. The response may include information on an identifier of the device, or may include information on a service supported by the device. At the time of transmission of the response from the device to the UE in Step ST1127, the device may emit radio waves to the UE. The device may perform transmission of Step ST1127 by using radio waves from the UE. Emission of the radio waves from the UE to the device and transmission of a signal from the device to the UE in Step ST1127 may be performed by using the scheduling grant of Step ST1123. The UE acquires information of the device by using Step ST1127. The UE may perform measurement of a received signal of Step ST1127. The measurement may be measurement of received power, may be measurement of an SINR, or may be measurement of an error rate, for example.

In Step ST1131 illustrated in Fig. 11, the UE performs a scheduling request to the base station. In the example illustrated in Fig. 11, the request of Step ST1131 is a scheduling request related to communication between the UE and the base station. In the scheduling request of Step ST1131, resources different from those of the scheduling request for communication between the UE and the device may be used.

In Step ST1133 illustrated in Fig. 11, the base station notifies the UE of a scheduling grant. In the example illustrated in Fig. 11, the grant of Step ST1133 is a scheduling grant related to uplink transmission from the UE to the base station. In Step ST1135, the UE transmits an uplink signal to the base station. The uplink signal may include information acquired in Step ST1127, for example, information on the identifier of the searched device, may include device search results, for example, information on the number of devices searched, or may include information on measurement results of the received signal.

Although the example illustrated in Fig. 11 illustrates a case in which the scheduling request related to Step ST1125 and the scheduling request related to Step ST1127 are performed in Step ST1121 being the same signaling, they may be performed by using different signalings. Consequently, for example, change in a radio wave environment in the communication system can be flexibly dealt with.

Although the example illustrated in Fig. 11 illustrates a case in which device search is performed, reading of data from the device may be performed. Step ST1125 may include information (for example, an identifier) for identifying the device as a reading target, or may include information on data (for example, a type of data) to be read. Step ST1127 may include information for identifying the device, may include data of the device, or may include information on a type of data of the device. Step ST1135 may include the information for identifying the device, may include the data of the device, may include the information on the type of data of the device, or may include measurement results of the received signal performed by the UE. Consequently, for example, the communication system can read data of the device.

As another example, in Fig. 11, writing of data into the device may be performed. Step ST1125 may include information (for example, an identifier) for identifying the device as a writing target, or may include information on data (for example, contents of data, a type of data) to be written. Step ST1127 may include information for identifying the device, or may include information on data writing results (for example, success or failure of the writing, contents of the written data). Step ST1135 may include the information for identifying the device, may include the information on data writing results (for example, success or failure of the writing, contents of the written data), or may include measurement results of the received signal performed by the UE. Consequently, for example, the communication system can write data of the device.

Scheduling of communication between the UE and the device and scheduling between the UE and the base station may be collectively performed. For example, both schedulings may be performed by using the same scheduling grant. The scheduling may be used when a frequency of an uplink signal is used for communication between the UE and the device, for example. Consequently, for example, the amount of signaling between the base station and the UE can be reduced.

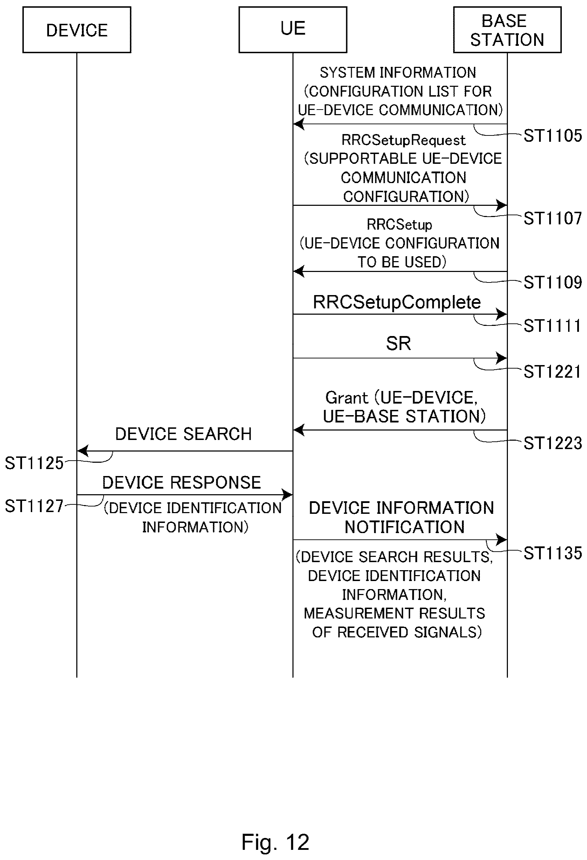

Fig. 12 illustrates a first other example of scheduling operation from the base station to the UE related to communication between the UE and the device. In the example illustrated in Fig. 12, scheduling from the base station to the UE is dynamically performed. Fig. 12 illustrates a case in which scheduling between the UE and the device and scheduling between the UE and the base station are performed by using the same signaling. In Fig. 12, processings similar to those of Fig. 11 are denoted by the same step numbers, and common description will be omitted.

Steps ST1105 to ST1111 illustrated in Fig. 12 are similar to those of Fig. 11.

In Step ST1221 illustrated in Fig. 12, the UE performs a scheduling request to the base station. In the example illustrated in Fig. 12, the request is a scheduling request related to communication between the UE and the device and communication between the UE and the base station. The scheduling request of Step ST1221 may include each of information indicating the scheduling request for communication between the UE and the base station and information indicating the scheduling request for communication between the UE and the device. As another example, neither of the pieces of information described above may be included.

In Step ST1223 illustrated in Fig. 12, the base station notifies the UE of a scheduling grant. In the example illustrated in Fig. 12, the grant is a scheduling grant related to both of communication between the UE and the device and communication between the UE and the base station. The scheduling grant may include the information illustrated in (1) to (8) described above. In the signaling of Step ST1223, both schedulings may be included in the same DCI, or different DCIs may be included in the same signaling.

Steps ST1125 to ST1135 illustrated in Fig. 12 are similar to those of Fig. 11. Transmission of Steps ST1125 to ST1135 may be performed by using the scheduling grant of Step ST1223.

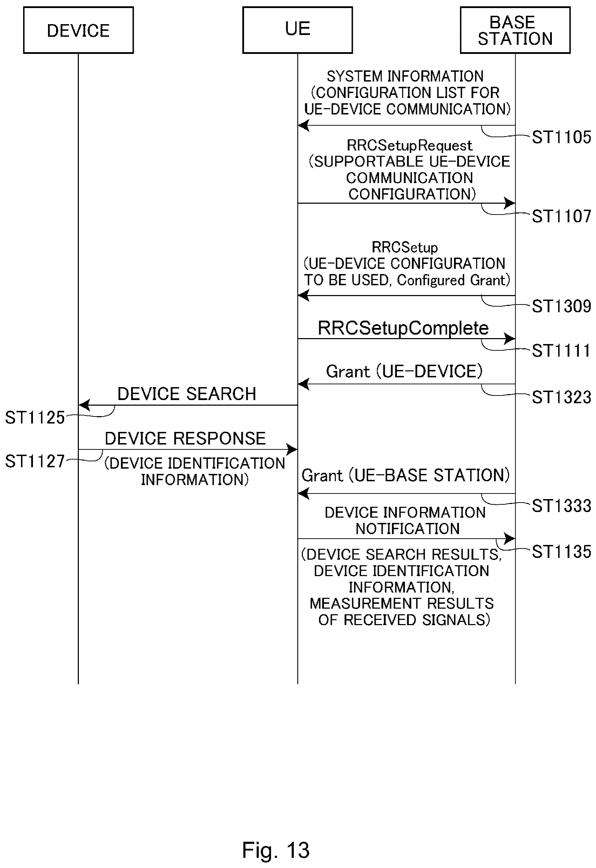

A configured grant may be used for scheduling of communication between the UE and the device. Fig. 13 illustrates a second other example of scheduling operation from the base station to the UE related to communication between the UE and the device. Fig. 13 illustrates an example in which a type 2 configured grant is used for scheduling from the base station to the UE. In the example illustrated in Fig. 13, both of scheduling between the UE and the device and scheduling between the UE and the base station are performed by using a type 2 scheduling grant. In the example illustrated in Fig. 13, scheduling between the UE and the device and scheduling between the UE and the base station are performed by using different signalings. In Fig. 13, processings similar to those of Fig. 11 are denoted by the same step numbers, and common description will be omitted.

Steps ST1105 and ST1107 illustrated in Fig. 13 are similar to those of Fig. 11.

In Step ST1309 illustrated in Fig. 13, the base station notifies the UE of information on a configuration used between the UE and the device. Step ST1309 may include information similar to that in Step ST1109 of Fig. 11. Step ST1309 may include information on a configured grant for the UE. The information on the configured grant may include the information of (1) to (8) described above, for example. The UE performs the configuration for communication between the UE and the device and the configuration for communication between the UE and the base station by using the information notified in Step ST1309.

Step ST1111 illustrated in Fig. 13 is similar to that of Fig. 11.

In Step ST1323 illustrated in Fig. 13, the base station notifies the UE of a scheduling grant. In the example illustrated in Fig. 13, the grant is a type 2 configured grant. The scheduling grant notified in Step ST1323 is a scheduling grant related to communication between the UE and the device. The scheduling grant may include the information illustrated in (1) to (8) described above. In Fig. 13, the scheduling request from the UE to the base station may not be performed.

Steps ST1125 and ST1127 illustrated in Fig. 13 are the same as those of Fig. 11.

In Step ST1333 illustrated in Fig. 13, the base station notifies the UE of a scheduling grant. In the example illustrated in Fig. 13, the grant is a type 2 configured grant. The scheduling grant notified in Step ST1333 is a scheduling grant related to communication between the UE and the base station.

Step ST1135 illustrated in Fig. 13 is the same as that of Fig. 11.

Although the example illustrated in Fig. 13 illustrates a case in which the type 2 configured grant is used, a type 1 configured grant may be used. In this case, information included in Step ST1323 and Step ST1333 may be included in Step ST1309. Consequently, for example, the number of times of signaling from the base station to the UE can be reduced.

Communication between the UE and the device may be scheduled at timing of On-duration of DRX. The above-described DRX may be Connected mode-DRX (C-DRX), for example. Consequently, for example, power consumption of the UE can be reduced. As another example, communication between the UE and the device may be scheduled at timing of Inactive of DRX. Consequently, for example, communication between the UE and the device can be quickly performed.

In communication between the UE and the device, retransmission may be performed. The retransmission may be performed by using a retransmission request from the communication object, or may be performed by using information indicating that the communication object fails to correctly perform reception processing on a received signal, for example. Consequently, for example, reliability in communication between the UE and the device can be enhanced.

The UE may perform a scheduling request for resources to be used for retransmission to the base station. Consequently, for example, flexible scheduling in communication between the UE and the device can be performed. As another example, the UE does not perform the scheduling request for resources to be used for retransmission to the base station. For example, the base station may perform scheduling also including the resources related to retransmission to the UE. The scheduling from the base station to the UE may include information indicating that the resources related to retransmission are included. The UE may perform retransmission in communication with the device by using the information. Consequently, for example, the amount of signaling between the UE and the device can be reduced.

The HARQ may not be used for communication between the UE and the device. Consequently, for example, complexity in communication between the UE and the device can be avoided.

As another example, the HARQ may be used for communication between the UE and the device. Consequently, for example, reliability in communication between the UE and the device can be enhanced.

Repetition may not be used for communication between the UE and the device. Consequently, for example, complexity in communication between the UE and the device can be avoided.

As another example, repetition may be used for communication between the UE and the device. Consequently, for example, reliability in communication between the UE and the device can be enhanced, and increase in power consumption of the UE can be prevented.

The UE may notify the base station of information on whether or not the UE supports retransmission in communication with the device, may notify the base station of information on whether or not the UE supports the HARQ, or may notify the base station of information on whether or not the UE supports repetition. The notification from the UE to the base station may be performed by using a UE capability, or RRC signaling, for example, RRC setup request (RRCSetupRequest) signaling may be used, or RRC resume request (RRCResumeRequest) signaling may be used, for example. Consequently, for example, the base station can quickly recognize whether or not the UE supports the HARQ and/or whether or not the UE supports repetition of the UE.

The base station may notify the UE of information on whether or not retransmission in communication with the device is used, may notify the UE of information on whether or not the HARQ is used, or may notify the UE of information on whether or not repetition is used. The information notified from the base station to the UE may be included in the above-described configuration related to communication between the UE and the device notified from the base station to the UE, for example. Consequently, for example, the UE can quickly recognize whether or not retransmission in communication with the device is used, whether or not the HARQ is used, and/or whether or not repetition is used.

Activation/deactivation of a configured grant may be provided. The configured grant may be a configured grant used for scheduling between the UE and the device, for example. The base station may notify the UE of information on activation/deactivation of the configured grant. For the notification, RRC signaling may be used, MAC signaling may be used, or L1/L2 signaling may be used. Consequently, for example, flexible scheduling in the communication system can be performed.

The device search disclosed in the first embodiment may be device check, or may be device detection.

According to the first embodiment, scheduling of communication between the UE and the device can be performed, and as a result, communication between the UE and the device can be performed in the communication system.

### Second Embodiment

In making communication on the air interface between the device and the UE or the gNB coexist with communication on the air interface (Uu) between the UE and the gNB and/or communication on the air interface (PC5) between the UE and another UE, it is required to reduce interference with another UE and/or base station from communication between the device and the UE or the gNB.

However, no disclosures have been made on a method of controlling power in communication between the UE and the device. Thus, communication between the device and the UE or the gNB may interfere with another UE and/or base station.

The second embodiment will disclose a method for solving the above-described problem.

As an example of the method for solving the problem, the UE may control power in communication between the UE and the device. The UE may determine power used for communication between the UE and the device by using power of a received signal from the device.

For example, the UE may increase transmission power from the UE to the device, with a trigger being the power of the received signal from the device being small. For example, when the device uses backscatter communication (see NPL 35), the UE may increase the transmission power from the UE to the device. Consequently, for example, reliability in communication between the device and the UE can be enhanced.

As another example, the UE may reduce transmission power from the UE to the device, with a trigger being the power of the received signal from the device being large. For example, when the device uses backscatter communication, the UE may reduce the transmission power from the UE to the device. Consequently, for example, power consumption of the UE can be reduced.

The UE may measure received power from the device for each transmit beam. For the transmit beam, the signal for deriving the beam disclosed in the first embodiment may be used. Consequently, for example, the UE can determine an optimal beam for communication with the device.

Target received quality of the UE may be configured. The target received quality may be obtained by using received power, or may be obtained by using an SINR, for example. The configuration may be provided for each UE, may be provided for each plurality of UEs, may be provided for each cell, may be provided for each plurality of cells, may be provided for each PLMN, may be provided for each NPN, or may be uniformly determined in the communication system.

Maximum power of the UE may be configured. The maximum power may be maximum power in communication between the UE and the device, may be maximum power in communication between the UE and the base station, may be maximum power in communication between the UE and another UE, or may be maximum power out of two or more of the above.

The target received quality and/or the maximum power of the UE may be determined by the UE itself, may be determined by the base station, may be determined by the core NW apparatus, or may be predefined in a standard. The base station may broadcast or perform notification of the target received quality or the maximum power of the UE to the UE. For the broadcasting or the notification from the base station to the UE, system information may be used, RRC signaling may be used, MAC signaling may be used, or L1/L2 signaling may be used. As another example, the core NW apparatus may notify the UE of the information. For notification of the information, for example, NAS signaling may be used.

The base station and/or the core NW apparatus may notify the UE of information on desired received power of the device. The desired received power may be received power with which the device is operable, for example. The received power operable by the device may be received power that allows the device to perform device data processing (for example, reading, writing, computation), or may be received power that allows the device to transmit a signal to the UE, for example. A plurality of the desired received powers may be provided. For example, as the desired received power, each of the received power that allows the device to perform device data processing (for example, reading, writing, computation) and the received power that allows the device to transmit a signal to the UE may be provided. The desired received power may be predefined in a standard. The UE may determine transmission power for the device by using information on the desired received power. Consequently, for example, communication quality between the UE and the device can be secured.

Other solutions will be disclosed. The base station controls power in communication between the UE and the device. The UE notifies the base station of information on received power from the device. The UE may notify the base station of transmission power of the UE. The transmission power may be transmission power used for communication between the UE and the device, for example. Consequently, for example, the base station can recognize the transmission power of the UE, and as a result, interference with other apparatuses in the communication system can be reduced.

As another example, the UE may request the base station to increase or decrease the transmission power of the UE. Consequently, for example, the amount of signaling from the UE to the base station can be reduced.

For a notification of the information from the UE to the base station, UCI may be used. Consequently, for example, the notification from the UE to the base station can be quickly performed. As another example, for the notification, MAC signaling may be used. Consequently, for example, reliability of the notification can be enhanced owing to HARQ control. As another example, for the notification, RRC signaling may be used. Consequently, for example, the amount of information included in the notification can be increased. The same may apply to signaling used for the request from the UE to the base station.

The base station determines power in communication between the UE and the device. The base station may use the above-described notification and/or request for determination of the power in communication between the UE and the device. The base station notifies the UE of information on the transmission power of the UE. The notification may include information indicating communication between the UE and the device, may include information indicating communication between the UE and the base station, or may include information indicating communication between the UE and another UE. Consequently, for example, the UE can quickly recognize the communication object as a target of the notified transmission power.

The notification may be performed by using the notification of the information of (2-4) disclosed in the first embodiment, for example. Consequently, for example, complexity in the communication system can be avoided. For the notification of the information from the base station to the UE, dedicated signaling may be provided and used. Consequently, for example, power control can be flexibly performed.

The base station may determine whether or not repetition is performed. The base station may notify the UE of information on repetition. The notification may include information on communication in which repetition is performed (for example, communication from the UE to the device, communication from the device to the UE), may include information on whether or not repetition is performed, may include information on the number of times of repetitions, may include information on power in each repetition, may include information (for example, an identifier) of the device, or may include a combination of two or more of the above. The notification from the base station to the UE may be performed by using the notification of the information of (1) to (8) disclosed in the first embodiment, for example. Consequently, for example, complexity in the communication system can be avoided. For the notification of the information from the base station to the UE, dedicated signaling may be provided and used. Consequently, for example, repetition control can be flexibly performed. The UE and/or the device may perform repetition by using the notification. Consequently, for example, reliability in communication between the UE and the device can be secured, and transmission power of the UE can be reduced.

The target received quality of the UE may be configured, or the maximum power of the UE may be configured. A configuration and/or a notification of the target received quality and/or the maximum power of the UE may be the same as the method disclosed in the above-described solution.

Transmission from the UE to the device may include information on transmission power of the UE. Consequently, for example, the device can measure path loss with the UE.

Transmission of a signal from the device to the UE may include information on received power of a signal of the UE. The UE may derive path loss between the UE and the device by using the information. Consequently, for example, the amount of signaling from the UE to the device can be reduced.

The signal transmitted from the device to the UE may include information on the received power for each transmit beam from the UE, or may include information on the received power of a beam derivation signal transmitted from the UE. Consequently, for example, the UE can determine an optimal beam for communication with the device.

As another example, transmission of a signal from the device to the UE may include information on path loss derived by the device. Consequently, for example, the amount of processing in the UE can be reduced.

Initial transmission power of the UE may be configured. The initial transmission power may be initial transmission power after connection with the base station has started, may be transmission power in initial communication of the communication object with the device, or may be communication after the elapse of a predetermined period of time since the last communication with the device, for example. The initial transmission power of the UE may be provided for communication between the UE and the device, may be provided for communication between the UE and the base station, may be provided for communication between the UE and another UE, or may be provided via the above-described plurality of communications.

The above-described initial transmission power may be broadcast or notified from the base station to the UE by using system information, may be determined by the base station and individually notified to the UE, may be configured in a SIM in advance, or may be predefined a standard. As an example of the base station individually notifying the UE, information on the initial transmission power may be included in signaling for the base station to transition the UE from the RRC_CONNECTED state to the RRC_IDLE state for notification, or the information may be included in signaling for the base station to transition the UE from the RRC_CONNECTED state to the RRC_INACTIVE state for notification. As another example, the above-described initial transmission power may be determined in the UE by using received power from the device. The received power from the device may be received power of a signal resulting from backscatter of radio waves from another base station or another UE, for example.

The above-described broadcasting or notification may include information indicating communication between the UE and the device, may include information indicating communication between the UE and the base station, or may include information indicating communication between the UE and another UE. Consequently, for example, the UE can quickly recognize the communication object as a target of the notified transmission power.

The base station may prioritize communication between the UE and the device over transmission from another UE. The transmission may be transmission from such another UE to the base station, may be transmission from such another UE to the device, or may be transmission from such another UE to yet another UE. The base station may indicate a stop of transmission to the UE. The indication may include information on a cause of the stop, for example. The information on a cause of the stop may include information on communication between the UE and the device, or may include information on resources (for example, frequency, time) used for the communication, for example. The indication may be included in DCI for such another UE, for example. Such another UE may stop transmission from the UE by using the indication. Transmission stopped by such another UE may be entire scheduled transmission, or may be a stop of only the resources overlapping with communication between the UE and the device. Consequently, for example, interference with the UE performing communication with the device from another UE can be prevented.

The base station may notify another base station of information on resources scheduled by the base station for communication between the UE and the device. The information may include information on communication between the UE and the device, or may include information on a priority of the communication, for example. Such another base station may stop transmission and reception to and from the UE under the another base station, with a trigger being the notification. Consequently, for example, interference with the UE performing communication with the device from another base station can be prevented.

According to the second embodiment, transmission power control in communication between the UE and the device can be performed, and as a result, interference with another UE and/or base station from communication between the device and the UE or the gNB can be reduced.

### Third Embodiment

In the communication system, communication between the UE and the device may be supported, or sidelink communication may be supported. However, no disclosures have been made on coexistence between sidelink communication and communication between the UE and the device in the same UE. As a result, malfunction may occur in the UE.

The third embodiment will disclose a method for solving the above-described problem.

As an example of the method for solving the problem, sidelink communication may be prioritized over communication with the device. For example, the UE performing sidelink communication may be configured to unable to perform communication with the device. The UE having a capability of performing sidelink communication may be unable to perform communication with the device (for example, not have the capability, be unable to perform configuration, be unable to perform transmission and reception), and the UE configured with sidelink communication may be unable to perform communication with the device (for example, be unable to perform configuration, be unable to perform transmission and reception). Consequently, for example, excessive power consumption of the UE can be prevented.

As another example, the UE performing sidelink communication may be able to perform communication with the device. For example, the UE having a capability of performing sidelink communication may be able to perform communication with the device (for example, have the capability, be able to perform configuration), and the UE configured with sidelink communication may be able to perform communication with the device (for example, be able to perform configuration, be able to perform transmission and reception). Consequently, for example, the UE can search for the device in a wide range.

The UE performing sidelink communication may be a UE not involved in a relay, for example. As another example, it may be a UE involved in a relay. The UE involved in a relay may be a remote UE (see clause 6.3.12 of NPL 26), or may be a relay UE (see clause 6.3.12 of NPL 26), for example. The above-described relay may be a UE-NW relay, or may be a UE-UE relay, for example.

The base station may perform scheduling between the device and the UE. As another example, the relay UE may perform the scheduling. As another example, the remote UE may perform the scheduling. The UE performing sidelink communication may be a UE not involved in a relay, for example. As another example, the UE itself performing communication with the device may perform the scheduling.

As another example, communication with the device may be prioritized over sidelink communication. For example, the UE performing communication with the device may be unable to perform sidelink communication. The UE having a capability of performing communication with the device may be unable to perform sidelink communication (for example, not have the capability, be unable to perform configuration, be unable to perform transmission and reception), and the UE configured with communication with the device may be unable to perform sidelink communication (for example, be unable to perform configuration, be unable to perform transmission and reception). Consequently, for example, excessive power consumption of the UE can be prevented.

As another example, the UE performing communication with the device may be able to perform sidelink communication. For example, the UE having a capability of performing communication with the device may be able to perform sidelink communication (for example, have the capability, be able to perform configuration), and the UE configured with communication with the device may be able to perform sidelink communication (for example, be able to perform configuration, be able to perform transmission and reception). Consequently, for example, the UE can perform communication using the UE-NW relay, and as a result, coverage of the UE can be extended.

As another example, which is to be prioritized between communication with the device and sidelink communication may be configurable. The configuration may be determined for each PLMN, may be determined for each NPN, may be determined for each tracking area, may be determined for each RNA, may be determined for each base station, may be determined for each cell, or may be determined for each UE. The configuration may be performed by the core NW apparatus, or may be performed by the base station. The configuration may be performed in a SIM in advance. The core NW may notify the UE of the configuration. The notification may be performed by using NAS signaling, for example. As another example, the base station may broadcast or perform notification of the configuration to the UE. The broadcasting or the notification may be performed by using system information, for example. As another example, the notification may be performed by using RRC signaling, may be performed by using MAC signaling, or may be performed by using L1/L2 signaling.

As another example, the configuration performed earlier between communication with the device and sidelink communication may be prioritized. For example, the UE configured with communication with the device may be unable to perform sidelink communication, and the UE configured with sidelink communication may be unable to perform communication with the device. Consequently, for example, complexity of the communication system can be avoided.

As another example, the later configuration may be prioritized between communication with the device and sidelink communication. For example, sidelink communication may also be performed in the UE configured with communication with the device, and communication with the device may also be performed in the UE configured with sidelink communication. Consequently, for example, flexibility of the communication system can be enhanced.

As another example, whether or not simultaneous communication of communication with the device and sidelink communication can be performed may be configurable. The configuration may be determined for each PLMN, may be determined for each NPN, may be determined for each tracking area, may be determined for each RNA, may be determined for each base station, may be determined for each cell, or may be determined for each UE. The configuration may be performed by the core NW apparatus, or may be performed by the base station. The configuration may be preconfigured in a SIM. The core NW may notify the UE of the configuration. The notification may be performed by using NAS signaling, for example. As another example, the base station may broadcast or perform notification of the configuration to the UE. The broadcasting or the notification may be performed by using system information, for example. As another example, the notification may be performed by using RRC signaling, may be performed by using MAC signaling, or may be performed by using L1/L2 signaling.

As another example, a parameter related to whether or not simultaneous communication of communication with the device and sidelink communication can be performed may be provided. The parameter may be included in a UE capability, for example. The UE may notify the base station of the parameter.

Resources used for communication with the device may be determined in advance. Candidates of the resources used for communication with the device may be determined in advance. The candidates may be the same as a sidelink resource pool (see NPL 2), for example. As another example, the candidates may be different from the sidelink resource pool. There may or may not be an overlap between the candidates and the sidelink resource pool. The candidates may be a part of the sidelink resource pool, or the candidates may include the sidelink resource pool. Each resource constituting the sidelink resource pool may be assigned information on whether or not communication with the device can be performed.

The UE out of coverage of the base station may be able to perform communication with the device. Consequently, for example, communication between the UE and the device can be performed in a wide range.

As another example, the UE out of coverage of the base station may be unable to perform communication with the device. Consequently, for example, complexity in the communication system can be avoided.

As another example, whether or not communication with the device can be performed in the UE out of coverage of the base station may be configurable. The configuration may be included in a policy or a parameter of UE-device communication, for example. The core NW apparatus may transmit information on the configuration to the base station. The notification from the core NW apparatus to the base station may be performed as a notification of the policy or the parameter of UE-device communication, for example. The core NW apparatus or the base station may transmit information on the configuration to the UE. The notification from the core NW apparatus or the base station to the UE may be performed as a notification of the policy or the parameter of UE-device communication, for example. For example, the information on the configuration may be transmitted from the AF to the UE via the PCF, the AMF, and the gNB as the policy or the parameter of UE-device communication. The UE supporting communication with the device may be provided with the policy or the parameter of UE-device communication by the core NW apparatus. By including the information on the configuration in the policy or the parameter, the UE supporting communication with the device can acquire the information on the configuration. For example, the service and the configuration can be associated with each other.

The UE may check a frequency resource use state in another UE and/or base station. The check may be performed through reception operation performed by the UE in the frequency resources, for example. The frequency resources may be frequency resources to be used by the UE for communication with the device, for example. The check may be performed for another UE when the UE is out of coverage of the base station, for example. The UE may not perform communication with the device in the frequency resources used by another UE and/or base station. Consequently, for example, interference with another UE and/or base station can be reduced.

According to the third embodiment, the UE can support sidelink communication and communication between the UE and the device, and as a result, malfunction in the UE can be prevented.

### Fourth Embodiment

In introducing the device into the mobile communication system, communication needs to be performed between the device and the UE and/or the base station. However, no disclosures have been made on details of information transmitted and received in the communication. As a result, there is a problem that the device cannot perform communication with the UE and/or the base station, and the device cannot be introduced into the mobile communication system.

The fourth embodiment will disclose a method for solving the above-described problem.

In order to solve the problem, the UE transmits a signal to the device. The signal may be a notification related to device search, may be a writing request for information into the device, or may be a reading request for information from the device, for example.

As information included in the signal, the following (a) to (k) are disclosed.

(a) Information indicating communication from the UE to the device.
(b) Information on a type of communication from the UE to the device.
(c) Information on an identifier of the UE.
(d) Information on an identifier of the device.
(e) Information to be written into the device.
(f) Information on a type of information to be read from the device.
(g) Information on time until a response from the device.
(h) Information on error detection and/or error correction.
(i) Information on transmission power.
(j) Information on a service.
(k) Combinations of (a) to (j) described above.

The information of (a) described above may be a notification related to search, check, and/or detection of the device, may be a writing request for information into the device, or may be a reading request for information from the device, for example.

The information of (a) described above may be a pilot signal, for example. The pilot signal may be defined in a standard, for example. The device may recognize the signal from the UE by using the information. Consequently, for example, the device can receive the signal from the UE.

The information of (b) described above may be information indicating the notification related to search, check, and/or detection of the device, may be information indicating the writing request for information into the device, or may be information indicating the reading request for information from the device, for example. The device may determine the type of signal from the UE by using the information.

The information of (a) described above may include the information of (b) described above. For example, the pilot signal may be provided for each type of communication. Consequently, for example, the device can quickly determine the type of signal from the UE.

The information of (c) described above may be an RNTI of the UE, for example. As another example, the identifier may be an identifier assigned as a reader of the device. Consequently, for example, the device can quickly recognize the UE as a reader.

The information of (d) described above may include all of the identifiers of the devices, or may include a part of the identifiers of the devices. Information indicating that the devices corresponding to the identifiers or a part of the identifiers are a communication target may be included, or information indicating that the devices are out of the communication target may be included. As another example, the information of (d) described above may include information indicating that all of the devices are the target. The device may determine whether the device is a communication target of the signal from the UE by using the information. Consequently, for example, responses from the devices not being the communication target can be prevented.

The device may update information retained by the device by using the information of (e) described above. Consequently, for example, information owned by the device can be remotely updated.

The information of (e) described above may be encrypted. For example, it may be encrypted by using the identifier of the device. In this case, the information of (d) described above may not be included in the signal from the UE to the device. The device may decrypt the information of (e) described above by using the identifier of the device. Consequently, for example, security in communication between the UE and the device can be enhanced.

The information of (f) described above may include information on the identifier of the device, may include information on a type of data owned by the device (for example, measurement results of a sensor), or may include information on time, for example. The information on time may be associated with the data owned by the device, for example. The device may determine information to be transmitted to the UE by using the information. Consequently, for example, the device no longer needs to transmit all the pieces of information retained by the device, and as a result, efficiency, for example, resource use efficiency, in the communication system can be enhanced.

The information of (g) described above may be time from start of transmission of the signal from the UE to the device to start of a response from the device to the UE, or may be time from end of transmission of the signal from the UE to the device to start of a response from the device to the UE, for example. The device may perform a response to the UE by using the information. Consequently, for example, the device can transmit a response to the UE at an appropriate timing.

The information of (h) described above may be a code for detecting an error in the signal from the UE to the device or correcting the error, for example. The information of (h) described above may be CRC bits, or may be parity bits, for example. Consequently, for example, the device can quickly determine whether or not there is an error in the signal from the UE.

The information of (i) described above may include information on transmission power for the signal from the UE to the device. The device may measure received power of the signal from the UE to the device. Consequently, for example, the device can measure path loss in the signal from the UE.

The information of (j) described above may include information (for example, an identifier) for identifying the service related to transmission of the signal from the UE to the device, or may include information for identifying the service supported by the UE, for example. The information for identifying the service may be enhanced Mobile Broadband (eMBB), may be Ultra-Reliability Low Latency Communication (URLLC), or may be massive Machine Type Communication (mMTC), for example. As another example, although being determined depending on usage, the communication service may be asset tracking, may be access control, or may be other usage, for example. The device may determine whether to respond to the UE by using the information of (j) described above. For example, the device may not perform a response to device search from the UE not corresponding to the service supported by the device. Consequently, for example, the UE can prevent unnecessary device search, and interference with another UE and the like can be reduced.

The device transmits a signal to the UE. The signal may be a response to the signal transmitted from the UE to the device, for example.

As information included in the signal from the device to the UE, the following (aa) to (sa) are disclosed.

(aa) Information indicating communication from the device to the UE.
(ii) Information on a type of communication from the device to the UE.
(uu) Information on an identifier of the UE.
(ee) Information on an identifier of the device.
(oo) Information on reception results of communication from the UE.
(ka) Information on results of a writing request.
(ki) Information on data to be transmitted from the device.
(ku) Information on received power.
(ke) Information on error detection and/or error correction.
(ko) Information on a service.
(sa) Combinations of (aa) to (ko) described above.

The information of (aa) described above may be a response to search, check, and/or detection of the device, may be a response to writing of information into the device, or may be a notification related to results of reading of information of the device, for example.

The information of (aa) described above may be a pilot signal, for example. The pilot signal may be defined in a standard, for example. The UE may recognize the signal from the device by using the information. Consequently, for example, the UE can receive the signal from the device.

The information of (ii) described above may be information indicating the response to search, check, and/or detection of the device, may be information indicating the response to writing of information into the device, may be information indicating transmission of data from the device, or may be information indicating the notification related to results of reading of information of the device, for example. The UE may determine the type of signal from the device by using the information.

The information of (aa) described above may include the information of (ii) described above. For example, the pilot signal may be provided for each type of communication. Consequently, for example, the UE can quickly determine the type of signal from the device.

The information of (uu) described above may be the same as the information of (c) described above, for example. The UE may determine that the UE is a communication target of the signal from the device by using the information. Consequently, for example, malfunction of the UE not being the communication target can be prevented.

The information of (ee) described above may be the same as the information of (d) described above, for example. The information may be all of the identifiers of the devices, for example. Consequently, for example, the UE can quickly recognize a transmission source device.

The information of (oo) described above may be information indicating that the signal from the UE to the device was successfully correctly received, or may be information indicating that it was not successfully correctly received, for example. Whether or not it was successfully correctly received described above may be determined by using the information of (h) described above, for example. The UE may perform retransmission to the device by using the information. Consequently, for example, reliability in communication between the UE and the device can be enhanced.

The information of (ka) described above may include information written by the device. The UE may determine whether writing into the device was correctly performed by using the information. For example, the UE may perform the determination by comparing the information for which the UE has requested writing and information notified from the device. Consequently, for example, reliability related to the writing request for information from the UE to the device can be enhanced.

The information of (ka) described above may include information indicating whether or not the device has successfully written information into the device. The UE may recognize whether writing of information into the device has completed by using the information. Consequently, for example, the size of notification from the device to the UE can be reduced.

The information of (ki) described above may include information owned by the device. The information may be information read by the device, for example. The UE may acquire the information owned by the device by using the information.

The information of (ki) described above may include information on a type of information owned by the device. The information on a type may be the same as the information of (f) described above, for example. The UE may determine whether the information notified from the device is information of the type requested by the UE by using the information on the type. Consequently, for example, reliability related to reading of information from the device can be enhanced.

The information of (ku) described above may include information indicating received power for the signal from the UE to the device. The UE may recognize the received power in the device, or may derive path loss between the UE and the device, by using the information. Consequently, for example, power control in communication between the UE and the device can be performed.

The information of (ku) described above may include information indicating path loss in communication between the UE and the device. For example, the device may calculate the path loss by using the information of (i) described above transmitted from the UE. Consequently, for example, the amount of processing related to calculation of the path loss of the UE can be reduced.

The information of (ke) described above may be a code for detecting an error in the signal from the device to the UE or correcting the error, for example. The information of (ke) described above may be CRC bits, or may be parity bits, for example. Consequently, for example, the UE can quickly determine whether or not there is an error in the signal from the device.

The information of (ko) described above may include information (for example, an identifier) for identifying the service related to transmission of a signal from the device to the UE, or may include information for identifying the service supported by the device, for example. The information for identifying the service may be the same as the information of (j) described above, for example. For example, the UE may not notify the base station of information from the device not corresponding to the service supported by the UE. Consequently, for example, the size of signaling between the base station and the UE can be reduced.

According to the fourth embodiment, communication between the UE and the device can be performed, and as a result, the device can be introduced into the mobile communication system.

### Fifth Embodiment

In the communication system, communication between the UE and the device may be supported. The UE may operate as a reader and/or a writer with the device, for example. The base station may operate as a host in communication between the UE and the device. The core NW apparatus may operate as the host.

However, no disclosures have been made on protocols in the UE, the base station, and/or the core NW apparatus related to communication between the UE and the device. Thus, there is a problem that communication between the UE and the device cannot be supported in the communication system.

The fifth embodiment will disclose a method for solving the above-described problem.

As an example of the method for solving the problem, each of the UE and the base station may include a communication protocol (which may be hereinafter referred to as an RH protocol) between the reader/writer and the host. The protocol may be LLRP, may be ALE, or may be another protocol, for example.

Signaling of the protocol may be encapsulated by RRC signaling. The RRC signaling may be provided with signaling for encapsulating the protocol. Consequently, for example, complexity in the communication system can be avoided.

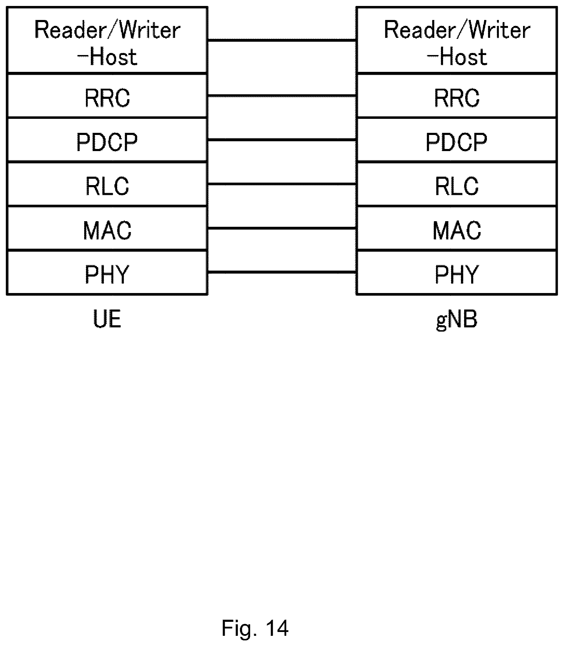

Fig. 14 is a diagram illustrating an example of protocol stacks between the UE and the base station (gNB) related to communication between the UE and the device. Fig. 14 illustrates an example in which the UE is a reader/writer and the base station is a host. In Fig. 14, the protocols of PHY, MAC, RLC, PDCP, and RRC are terminated between the UE and the base station. Each of the UE and the base station includes and terminates the RH protocol. The RH protocol (referred to as "Reader/Writer-Host" in Fig. 14) is encapsulated by RRC signaling.

As another example, the RRC signaling may include RH protocol signaling. For example, the RRC signaling may include information included in the RH protocol. Consequently, for example, the UE and/or the base station can quickly acquire the information included in the RH protocol.

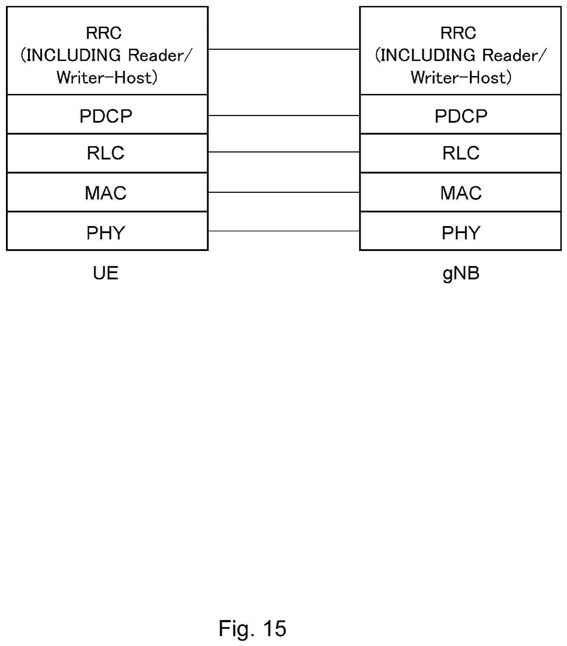

Fig. 15 is a diagram illustrating another example of protocol stacks between the UE and the base station related to communication between the UE and the device. Fig. 15 illustrates an example in which the UE is a reader/writer and the base station is a host. In Fig. 15, the protocols of PHY, MAC, RLC, PDCP, and RRC are terminated between the UE and the base station. In the example illustrated in Fig. 15, the RRC signaling includes information owned by the RH protocol.

As another example, signaling of the RH protocol may be encapsulated in MAC signaling, or information included in the RH protocol may be included in MAC signaling. For example, a CLIENT_REQUEST_OP message in LLRP (see clause 12.1.11 of NPL 36) may be transmitted by using MAC signaling. Consequently, for example, quick signaling from the UE to the base station can be performed. As another example, signaling of the RH protocol may be encapsulated in L1/L2 signaling, or information included in the RH protocol may be included in L1/L2 signaling. Consequently, for example, quicker signaling from the UE to the base station can be performed.

The core NW apparatus may operate as a host in communication between the UE and the device. The core NW apparatus may be an AMF, for example.

Signaling of the RH protocol may be encapsulated in NAS signaling. The NAS signaling may be provided with signaling for encapsulating the protocol. Consequently, for example, complexity in the communication system can be avoided.

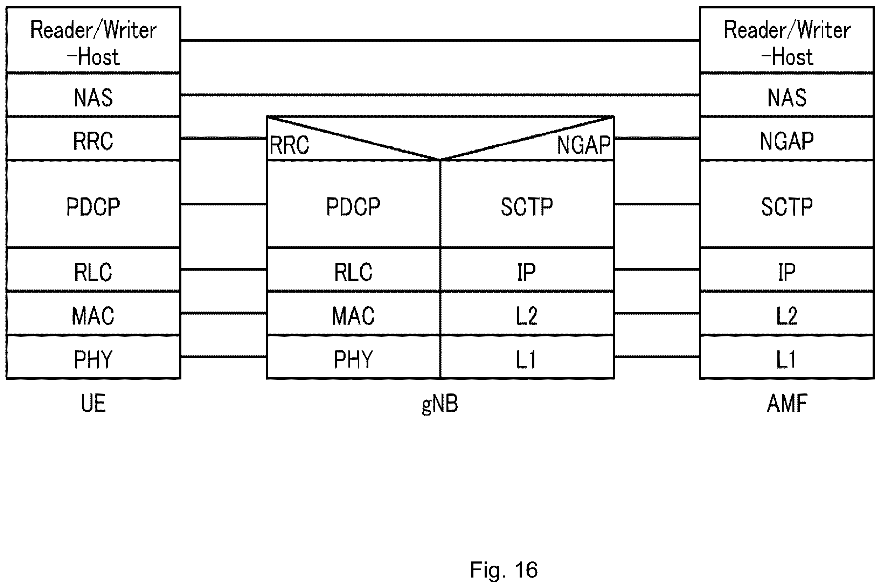

Fig. 16 is a diagram illustrating an example of protocol stacks between the UE and the core NW apparatus related to communication between the UE and the device. In the example illustrated in Fig. 16, the core NW apparatus is an AMF. Fig. 16 illustrates an example in which the UE is a reader/writer and the AMF is a host. In Fig. 16, the protocols of PHY, MAC, RLC, PDCP, and RRC are terminated between the UE and the base station. The protocols of L1, L2, IP, SCTP, and NGAP are terminated between the base station and the AMF. Each of the UE and the AMF includes and terminates the RH protocol. The RH protocol is encapsulated by NAS signaling.

As another example, the NAS signaling may include RH protocol signaling. For example, the NAS signaling may include information included in the RH protocol. Consequently, for example, the UE and/or the AMF can quickly acquire the information included in the RH protocol.

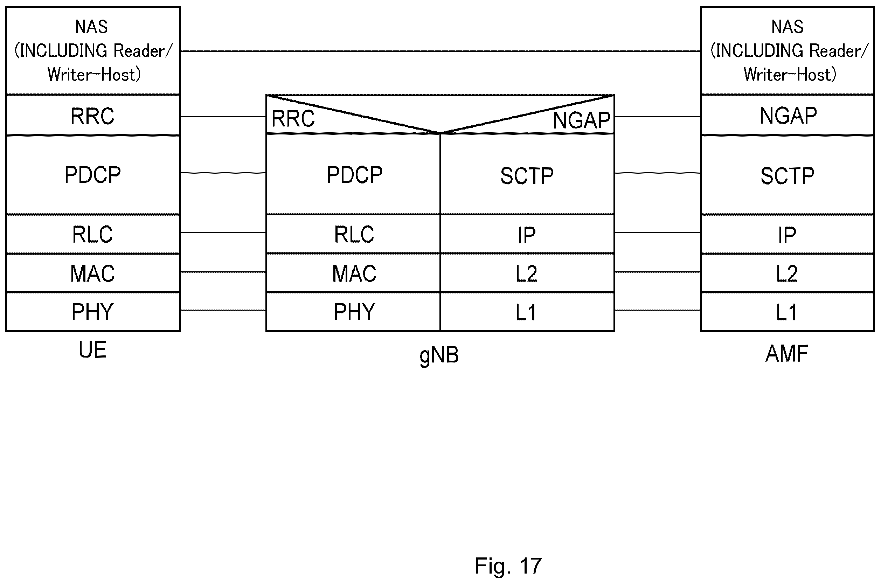

Fig. 17 is a diagram illustrating another example of protocol stacks between the UE and the core NW apparatus related to communication between the UE and the device. In the example illustrated in Fig. 17, the core NW apparatus is an AMF. Fig. 17 illustrates an example in which the UE is a reader/writer and the AMF is a host. In Fig. 17, the protocols of PHY, MAC, RLC, PDCP, and RRC are terminated between the UE and the base station. The protocols of L1, L2, IP, SCTP, and NGAP are terminated between the base station and the AMF. The NAS protocol is terminated between the UE and the AMF. In the example illustrated in Fig. 17, the NAS signaling includes information owned by the RH protocol.

Although the above illustrates an example in which the core NW apparatus as a host is an AM, another core NW apparatus may be a host. For example, it may be an SMF, may be a PCF, may be a UPF, or may be an NWDAF. Connection between the core NW apparatus and the UE may be performed via the base station and the AMF, or may be performed directly from the base station to the core NW apparatus. An interface between the UE and the core NW apparatus (which may be hereinafter referred to as a UE-core NW interface) may be provided. An interface between the base station and the core NW apparatus (which may be hereinafter referred to as a base station-core NW interface) may be provided.

For example, in the example illustrated in Fig. 16, the AMF may be the core NW apparatus. A protocol in the UE-core NW interface may be used instead of the NAS protocol owned by the UE and the AMF, or a protocol in the base station-core NW interface may be used instead of the NGAP protocol owned by the base station and the AMF. The same may apply to the example illustrated in Fig. 17.

According to the fifth embodiment, communication between the UE and the device can be supported in the communication system.

In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

For example, the methods disclosed in the embodiments and their alterations described above may be applied to communication between a UE and a UE or a UE and a NW via relay using SL communication.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

Various aspects of the present disclosure are summarized below as supplementary notes.

### (Supplementary Note 1)

A communication system comprising:
a base station supporting a fifth generation radio access system;
a communication terminal configured to connect to the base station; and
a device configured to connect to the base station or the communication terminal, wherein
the base station is configured to perform scheduling of communication between the device and the base station and scheduling of communication between the device and the communication terminal, and
the device is configured to communicate with the base station or the communication terminal in accordance with scheduling results from the base station.

### (Supplementary Note 2)

The communication system according to Supplementary Note 1, wherein
the communication terminal is configured to control transmission power to the device, based on power of a received signal from the device in communication with the device.

### (Supplementary Note 3)

The communication system according to Supplementary Note 1, wherein
the communication terminal is configured to notify the base station of at least one of power of a received signal from the device and power of a transmission signal to the device, and
the base station is configured to control power of a signal transmitted and received between the communication terminal and the device, based on the power notified from the communication terminal.

### (Supplementary Note 4)

The communication system according to any one of Supplementary Notes 1 to 3, wherein
in a case where the communication terminal performs sidelink communication being direct communication with another communication terminal, the base station is configured to perform scheduling of the sidelink communication.

### (Supplementary Note 5)

The communication system according to any one of Supplementary Notes 1 to 4, wherein
the communication terminal is configured to transmit information on the communication between the device and the communication terminal to the device, and
the device is configured to start communication with the communication terminal, based on the information received from the communication terminal.

### (Supplementary Note 6)

The communication system according to any one of Supplementary Notes 1 to 5, wherein
the communication terminal is configured to operate as at least one of a reader and a writer of the device, and
the base station is configured to operate as a host in communication between the communication terminal and the device.

### Reference Signs List

- 202: Communication Terminal Apparatus (Mobile Terminal),
- 210: Communication System,
- 213, 240-1, 240-2, 750: Base Station Apparatus (NR Base Station, Base Station),
- 214: 5G Core Unit,
- 215: Central Unit,
- 216: Distributed Unit,
- 217: Control-Plane Central Unit,
- 218: User-Plane Central Unit,
- 219: TRP,
- 301, 403: Protocol Processing Unit,
- 302: Application Unit,
- 304, 405: Encoder Unit,
- 305, 406: Modulating Unit,
- 306, 407: Frequency Converting Unit,
- 307-1 to 307-4, 408-1 to 408-4: Antenna,
- 308, 409: Demodulating Unit,
- 309, 410: Decoder Unit,
- 310, 411, 526: Control Unit,
- 401: EPC Communication Unit,
- 402: Other Base Station Communication Unit,
- 412: 5GC Communication Unit,
- 521: Data Network Communication Unit,
- 522: Base Station Communication Unit,
- 523: User Plane Communication Unit,
- 523-1: PDU Processing Unit,
- 523-2: Mobility Anchoring Unit,
- 525: Control Plane Control Unit,
- 525-1: NAS SECURITY UNIT,
- 525-2: Idle State Mobility Management Unit,
- 527: Session Management Unit,
- 527-1: PDU Session Control Unit,
- 527-2: UE IP Address Assigning Unit,
- 751-1 to 751-8: Beam,
- 752: Cell.

## Claims

1. A communication system comprising:
a base station supporting a fifth generation radio access system;
a communication terminal configured to connect to the base station; and
a device configured to connect to the base station or the communication terminal,
wherein
the base station is configured to perform scheduling of communication between the device and the base station and scheduling of communication between the device and the communication terminal, and
the device is configured to communicate with the base station or the communication terminal in accordance with scheduling results from the base station.

2. The communication system according to claim 1, wherein
the communication terminal is configured to control transmission power to the device, based on power of a received signal from the device in communication with the device.

3. The communication system according to claim 1, wherein
the communication terminal is configured to notify the base station of at least one of power of a received signal from the device and power of a transmission signal to the device, and
the base station is configured to control power of a signal transmitted and received between the communication terminal and the device, based on the power notified from the communication terminal.

4. The communication system according to any one of claims 1 to 3, wherein
in a case where the communication terminal performs sidelink communication being direct communication with another communication terminal, the base station is configured to perform scheduling of the sidelink communication.

5. The communication system according to any one of claims 1 to 4, wherein
the communication terminal is configured to transmit information on the communication between the device and the communication terminal to the device, and
the device is configured to start communication with the communication terminal, based on the information received from the communication terminal.

6. The communication system according to any one of claims 1 to 5, wherein
the communication terminal is configured to operate as at least one of a reader and a writer of the device, and
the base station is configured to operate as a host in communication between the communication terminal and the device.
